# EUROPEAN PATENT APPLICATION

(11) **EP 4 184 897 A1**
(43) Date of publication of application: **24.05.2023**
(21) Application number: 21843233.4
(22) Date of filing: 12.07.2021
(51) Int. Cl.: H04M 1/02, G09F 9/30, H04M 1/72469

(54) **ELECTRONIC DEVICE COMPRISING FLEXIBLE DISPLAY**

(30) Priority: 14.07.2020 KR 20200086965; 09.06.2021 KR 20210074715
(71) Applicant: Samsung Electronics Co., Ltd., Suwon-si, Gyeonggi-do 16677 (KR)
(72) Inventor: JI, Youngmin, Suwon-si Gyeonggi-do 16677 (KR); KIM, Daehyun, Suwon-si Gyeonggi-do 16677 (KR); KIM, Raetae, Suwon-si Gyeonggi-do 16677 (KR); SHIN, Moonchul, Suwon-si Gyeonggi-do 16677 (KR); YUN, Inkuk, Suwon-si Gyeonggi-do 16677 (KR); JUNG, Hojin, Suwon-si Gyeonggi-do 16677 (KR); HONG, Hyunju, Suwon-si Gyeonggi-do 16677 (KR)
(74) Representative: Nederlandsch Octrooibureau
(86) International application number: PCT/KR2021/008906
(87) International publication number: WO 2022/014994

(57) **Abstract**

An electronic device according to an embodiment of the present document may comprise: a first housing, which includes a firs edge having a first length, a second edge that is perpendicular to the first edge and has a second length that is shorter than the first length, a third edge that is parallel to the first edge and has the first length, and a fourth edge that is parallel to the second edge and has the second length; a second housing which includes, along the third edge, a fifth edge having a longitudinal length of a third length that is shorter than the first length, and which is rotatable around a hinge corresponding to the third length; a flexible display, which includes a first area and a second area that corresponds to the first housing, and a third area that corresponds to the second housing, the first area corresponding to the second length and the third length, the second area being a remaining area, of the area of the first housing, which excludes the first area, and the flexible display third area rotating with respect to the first area and the second area according to the rotation of the second housing about the hinge; and at least one processor electrically connected to the flexible display. According to various embodiments of the present document, a foldable electronic device facilitates carrying of the device in one hand of a user and can be conveniently operated, and enables the shape of the electronic device and the display area of a display to be changed while holding by the user is maintained.

## Description

### [Technical Field]

Various embodiments of the present document relate to a structure of an electronic device including a flexible display.

### [Background Art]

As the use of portable electronic devices increases, hardware development as well as software development is continuously performed. In particular, in terms of hardware, various types of electronic devices capable of meeting the needs of users are being invented for convenience of portability and operation.

In the shape of an electronic device, structures of various electronic devices are being developed such as a shape in which it is bendable without being limited to a general bar shape, a shape in which an electronic device can be folded by including a plurality of housings, and a shape in which some of a plurality of housings can be slid in/out.

### [Disclosure of Invention]

### [Technical Problem]

According to the prior art, in an electronic device of a shape in which the entire area of a display can be folded or the shape can be changed, a user cannot easily carry or operate the device with one hand.

According to the prior art, an improved user experience cannot be provided because the user cannot easily carry and operate.

### [Technical Solution]

An electronic device of an embodiment of the present document may include a first housing which includes a first edge having a first length, a second edge perpendicular to the first edge and having a second length shorter than the first length, a third edge parallel to the first edge and having the first length, and a fourth edge parallel to the second edge and having the second length, a second housing which includes, along the third edge, a fifth edge having a vertical length of a third length shorter than the first length, and which is rotatable about a hinge corresponding to the third length, a flexible display which includes a first area and a second area that correspond to the first housing and a third area that corresponds to the second housing, wherein the first area is an area corresponding to the second length and the third length, the second area is a remaining area other than the first area among the areas of the first housing, and the third area of the flexible display rotates with respect to the first area and the second area as the second housing rotates about the hinge, and at least one processor electrically connected to the flexible display. The at least one processor may display content on at least one of the first area, the second area, and the third area of the flexible display, based on the positional relationship between the first housing and the second housing.

### [Advantageous Effects of Invention]

According to various embodiments of the present disclosure, in a foldable electronic device, a user may be easy to carry and be convenient to operate the device with one hand.

According to various embodiments of the present document, the shape of an electronic device and a display area of a display may be changed while a user's holding state is maintained.

According to various embodiments of the present document, a display area may be efficiently utilized along with the convenience of user's portability and operation.

Effects obtainable based on various embodiments are not limited to the effects mentioned above, and other effects not mentioned could be clearly understood by those skilled in the art to which the present disclosure belongs from the description below.

### [Brief Description of Drawings]

FIG. 1 is a block diagram of an electronic device in a network environment according to an embodiment.
FIG. 2 is a diagram illustrating a simplified configuration of an electronic device according to an embodiment.
FIG. 3 is a diagram illustrating a simplified structure of an electronic device according to an embodiment.
FIG. 4 is a diagram illustrating a state in which a structure of an electronic device is changed according to an embodiment.
FIG. 5 is a side view illustrating a state in which a structure of an electronic device is changed according to an embodiment.
FIG. 6 is a diagram illustrating a state in which a structure of an electronic device is changed according to an embodiment.
FIG. 7 is a diagram illustrating an exploded perspective view of an electronic device according to an embodiment.
FIG. 8 is a diagram specifically illustrating a structure of an electronic device according to an embodiment.
FIG. 9 is a diagram for explaining a reinforcement structure of an electronic device according to an embodiment.
FIG. 10 is a diagram for explaining a reinforcement structure of an electronic device according to an embodiment.
FIG. 11 is a diagram for explaining a reinforcement structure of an electronic device according to an embodiment.
FIG. 12 is a diagram for explaining a reinforcement structure of an electronic device according to an embodiment.
FIG. 13 is a diagram illustrating a structure of an electronic device according to another embodiment.
FIG. 14 is a diagram illustrating a structure of an electronic device according to another embodiment.
FIG. 15 is a diagram illustrating a flow of an operation of an electronic device according to an embodiment.
FIG. 16 is a diagram illustrating an area of a display of an electronic device according to an embodiment.
FIG. 17 is a diagram illustrating a state in which content is displayed on a display area of an electronic device according to another embodiment.
FIG. 18 is a diagram illustrating a state in which content is displayed on a display area of an electronic device according to another embodiment.
FIG. 19 is a diagram illustrating a state in which content is displayed on a display area of an electronic device according to another embodiment.
FIG. 20 is a diagram illustrating a state in which content is displayed on a display area of an electronic device according to another embodiment.
FIG. 21 is a diagram illustrating a state in which content is displayed on a display area of an electronic device according to another embodiment.
FIG. 22 is a diagram illustrating a state in which content is displayed on a display area of an electronic device according to another embodiment.
FIG. 23 is a diagram illustrating a state in which an image is displayed on a display area of an electronic device according to an embodiment.
FIG. 24 is a diagram illustrating a state in which an image and a user interface are displayed on a display area of an electronic device according to an embodiment.
FIG. 25 is a diagram illustrating a state in which images of different attributes are displayed on a display area of an electronic device according to an embodiment.
FIG. 26 is a diagram illustrating a state in which images of different attributes are displayed on a display area of an electronic device according to another embodiment.
FIG. 27 is a diagram illustrating a flow in which an electronic device displays a user interface on a side area of a display according to an embodiment.
FIG. 28 is a diagram illustrating a state in which an electronic device displays a user interface on a side area of a display according to an embodiment.
FIG. 29 is a diagram illustrating an effect of an additional function of a display area of an electronic device according to an embodiment.
FIG. 30 is a diagram illustrating an additional function according a structure of an electronic device according to an embodiment.
FIG. 31 is a diagram illustrating an effect of an additional function of a display area of an electronic device according to an embodiment.
FIG. 32 is a diagram illustrating a screen display of a display area according a handling state of an electronic device according to an embodiment.
FIG. 33 is a diagram illustrating an additional function according a structure of an electronic device according to an embodiment.

### [Best Mode for Carrying out the Invention]

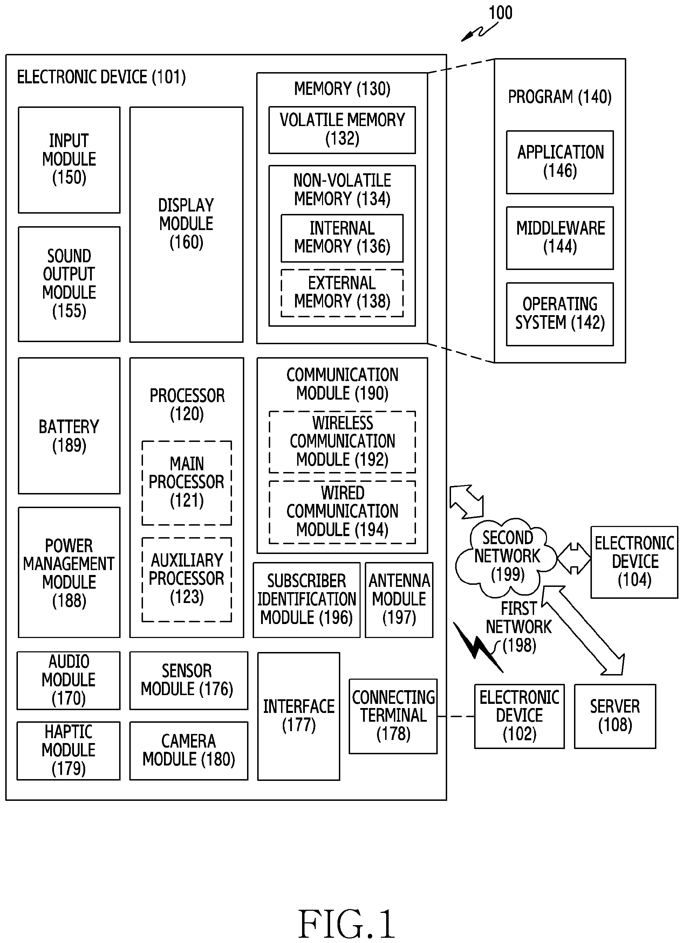

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mm Wave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

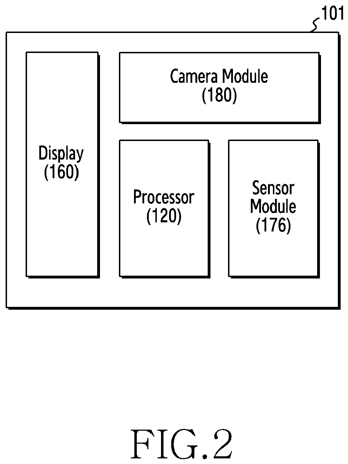

FIG. 2 may illustrate a simplified configuration of an electronic device according to an embodiment.

According to an embodiment, the electronic device 101 may include at least a processor 120, a display (or a display module) 160, a sensor module 176, and a camera module 180.

According to an embodiment, the display 160 may display an image and/or content.

In an embodiment, the display 160 may display an image acquired by the camera module 180 under the control of the processor 120. In an embodiment, the display 160 may display content of a program embedded in the electronic device 101 under the control of the processor 120.

In an embodiment, the display 160 may have a plurality of areas for displaying images and/or contents. For example, as the shape of the electronic device 101 is changed, the display 160 may display an image and/or content on at least one of a plurality of display areas under the control of the processor 120.

In an embodiment, the display 160 may be a flexible display. For example, the display 160 may be bent, folded, or slid.

According to an embodiment, the sensor module 176 may detect a shape change and/or posture change of the electronic device 101.

In an embodiment, the electronic device 101 may detect a shape change of the electronic device 101 under the control of the processor 120, based on the sensor module 176. For example, the shape change may be a shape change resulting from the folding of the electronic device 101.

In an embodiment, the electronic device 101 may detect a posture change of the electronic device 101 under the control of the processor 120, based on the sensor module 176. For example, the posture change may be a posture change according an inclination (or angle) and/or spatial coordinate with respect to the ground, of the electronic device 101.

In an embodiment, the electronic device 101 may detect a state change of the display 160 under the control of the processor 120, based on the sensor module 176.

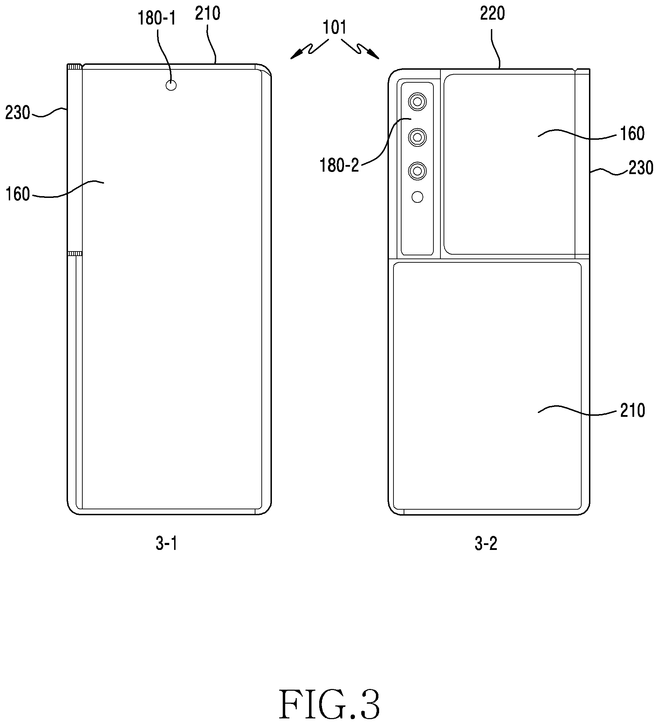

According to an embodiment, the camera module 180 may include a front camera module (e.g., a front camera module 180-1 of FIG. 3) and/or a rear camera module (e.g., a rear camera module 180-2 of FIG. 3).

According to an embodiment, the camera module 180 may acquire images external to the electronic device 101, under the control of the processor 120.

According to an embodiment, the processor 120 may control at least the operations of the display 160, the sensor module 176, and the camera module 180.

FIG. 3 illustrates a simplified structure of an electronic device according to an embodiment. Specifically, FIG. 3-1 illustrates a front surface of the electronic device 101, and FIG. 3-2 illustrates a rear surface of the electronic device 101.

In an embodiment, referring to FIG. 3-1 and FIG. 3-2, the electronic device 101 may include a first housing 210 and a second housing 220.

In an embodiment, a hinge 230 may be disposed between the first housing 210 and the second housing 220. For example, the first housing 210 and the second housing 220 may be connected to each other through the hinge 230.

In an embodiment, the second housing 220 may be rotatable about the hinge 230 with respect to the first housing 210. For example, the second housing 220 may be rotatable with respect to the first housing 210 about the hinge 230 disposed between the first housing 210 and the second housing 220.

In an embodiment, the first housing 210 and the second housing 220 may have a difference in size.

In an embodiment, the first housing 210 may include a first edge having a first length, a second edge perpendicular to the first edge and having a second length shorter than the first length, a third edge parallel to the first edge and having the first length, a fourth edge parallel to the second edge and having the second length. For another example, the first housing 210 may have a rectangular shape surrounded by the first edge to the fourth edge.

In an embodiment, the second housing 220 may consist of at least an edge (e.g., a fifth edge) having a vertical length of a third length shorter than the first length along the third edge, an edge (e.g., a sixth edge) perpendicular to the edge (e.g., the fifth edge) of the vertical length of the third length and having a horizontal length of a fourth length, an edge (e.g., a seventh edge) parallel to the edge (e.g., the fifth edge) of the vertical length of the third length and having the third length, and an edge (e.g., an eighth edge) parallel to the edge (e.g., the sixth edge) of the horizontal length of the fourth length and having the fourth length. For another example, the second housing 220 may have a smaller rectangular shape than the first housing 210, and may be a shape surrounded by the fifth edge to the eighth edge.

In an embodiment, the display 160 may be disposed on the first housing 210 and the second housing 220. For example, the display 160 may be disposed on front surfaces of the first housing 210 and the second housing 220.

In an embodiment, the front camera module 180-1 may be disposed on the front surface of the first housing 210, and may acquire an image of a front direction of the electronic device 101.

In an embodiment, the rear camera module 180-2 may be disposed on the rear surface of the second housing 220, and may acquire an image of a rear direction of the electronic device 101.

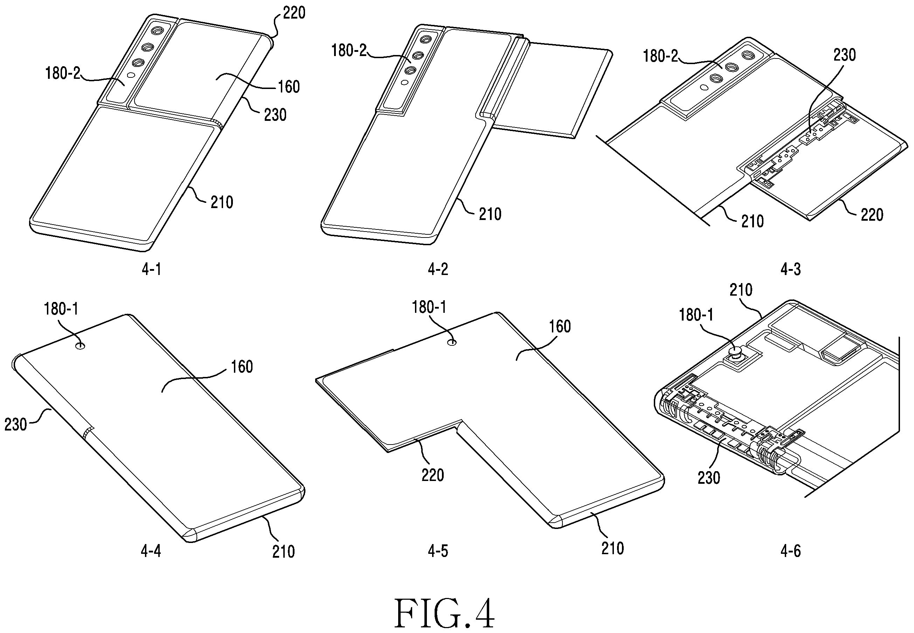

FIG. 4 illustrates a state in which a structure of an electronic device is changed according to an embodiment. FIG. 4-1 to FIG. 4-3 illustrate structural changes when the electronic device is viewed from the rear, and FIG. 4-4 to FIG. 4-6 illustrate structural changes when the electronic device is viewed from the front.

In an embodiment, referring to FIG. 4-1 to FIG. 4-3, a second housing 220 of the electronic device 101 may rotate about a hinge 230 with respect to a first housing 210. A display 160 may be disposed on front surfaces of the first housing 210 and the second housing 220, and as the second housing 220 rotates about the hinge 230, an area, on the second housing 220, of an area of the display 160 may be also rotated together.

In an embodiment, as the second housing 220 rotates about the hinge 230, a rear surface of the second housing 220 and a rear surface of the first housing 210 may face each other.

In an embodiment, the hinge 230 may be disposed between the first housing 210 and the second housing 220, and the hinge 230 may include a hinge structure and a hinge housing.

In an embodiment, a rear camera module 180-2 may be disposed on the rear surface of the first housing 210. The sum of a horizontal length of the rear camera module 180-2 and a horizontal length of the second housing 220 may correspond to a second length of the first housing 210. Also, a vertical length of the rear camera module 180-2 may correspond to a third length of the second housing 220.

In an embodiment, referring to FIG. 4-4 to FIG. 4-6, the display 160 may be disposed on a front surface of the electronic device 101. For example, the display 160 may be disposed on the front surfaces of the first housing 210 and the second housing 220, and due to a size difference between the first housing 210 and the second housing 220, the display 160 may have the shape of "¬".

In an embodiment, as illustrated in FIG. 4-4, as the second housing 220 rotates about the hinge 230, the rear surface of the second housing 220 and the rear surface of the first housing 210 may face each other. For example, when the rear surface of the second housing 220 and the rear surface of the first housing 210 face each other, the electronic device 101 may have a rectangular shape when viewed from the front.

In an embodiment, as illustrated in FIG. 4-5, when the display 160 is fully extended by rotating the second housing 220 about the hinge 230, the electronic device 101 is in the shape of "¬".

In an embodiment, as illustrated in FIG. 4-6, the hinge 230 may be disposed between the first housing 210 and the second housing 220, and the hinge 230 may include a hinge structure and a hinge housing.

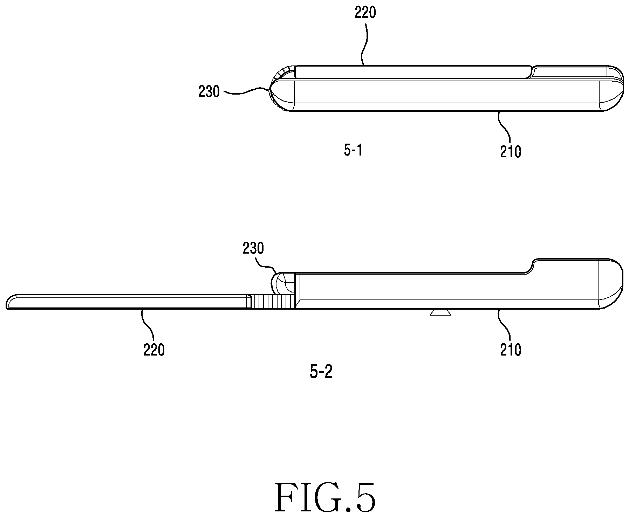

FIG. 5 is a side view illustrating a state in which a structure of an electronic device is changed according to an embodiment.

According to an embodiment, FIG. 5-1 is a side view illustrating a state in which a second housing 220 is rotated wherein a rear surface of a first housing 210 and a rear surface of the second housing 220 face or come into contact with each other. FIG. 5-2 is a side view illustrating a state in which the second housing 220 is rotated as illustrated in FIG. 4-5.

According to an embodiment, the second housing 220 may rotate at least 180 degrees about a hinge 230 with respect to the first housing 210.

In an embodiment, referring to FIG. 5-1, the rear surface of the second housing 220 may face the rear surface of the first housing 210. In this case, when looking at the front surface of the electronic device 101 or the first housing 210, the second housing 220 may not be seen or at least a part thereof may be seen. When the second housing 220 rotates 180 degrees about the hinge 230, a side surface of the electronic device 101 may have the shape illustrated in FIG. 5-2.

In an embodiment, referring to FIG. 5-2, the rear surface of the second housing 220 may be parallel to the rear surface of the first housing 210. The second housing 220 may form an angle of 180 degrees with the first housing 210.

In an embodiment, the second housing 220 of the electronic device 101 may move with respect to the first housing 210 by the hinge 230. For example, the second housing 220 may move with respect to the first housing 210, and the first housing 210, the second housing 220, and the hinge 230 may be linearly arranged.

According to an embodiment, as the second housing 220 rotates, the shape of the electronic device 101 may change.

In an embodiment, the electronic device having a side shape as illustrated in FIG. 5-1 may correspond to the shapes of the electronic devices of FIG. 4-1, FIG. 4-4, and FIG. 4-6.

In an embodiment, the electronic device having a side shape as illustrated in FIG. 5-2 may correspond to the shapes of the electronic devices of FIG. 4-2, FIG. 4-3, and FIG. 4-5.

In an embodiment, the working/movement of the second housing 220 of the electronic device 101 is not limited to the above-described scheme, and the second housing 220 may work or move in various schemes to provide various forms of the electronic device 101 for providing images to a user through areas of a display (e.g., the display 160).

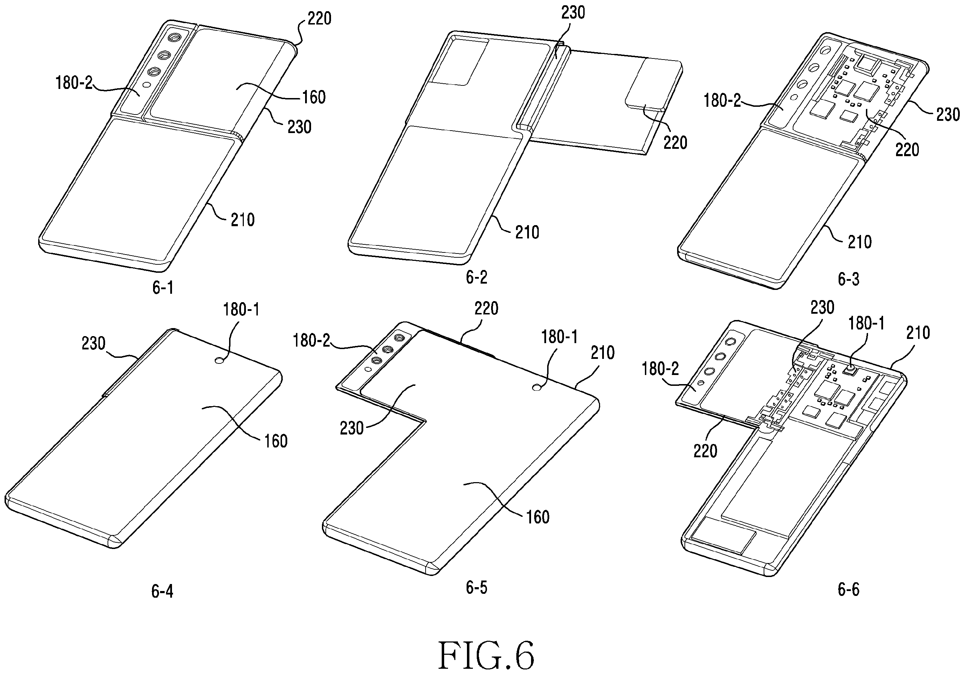

FIG. 6 is a diagram illustrating a state in which a structure of an electronic device is changed according to an embodiment.

FIG. 6-1 to FIG. 6-3 illustrate structural changes when the electronic device is viewed from the rear, and FIG. 6-4, FIG. 6-5, and FIG. 6-6 illustrate structural changes when the electronic device is viewed from the front.

In an embodiment, referring to FIG. 6-1 to FIG. 6-3, a second housing 220 of the electronic device 101 may rotate about a hinge 230 with respect to a first housing 210. A display 160 may be disposed on front surfaces of the first housing 210 and the second housing 220, and as the second housing 220 rotates about the hinge 230, an area, on the second housing 220, of an area of the display 160 may also be rotated together.

In an embodiment, a rear camera module 180-2 may be disposed on the front surface of the second housing 220. The sum of a horizontal length of the rear camera module 180-2 and a horizontal length of the second housing 220 may correspond to a second length of the first housing 210. Also, a vertical length of the rear camera module 180-2 may correspond to a third length of the second housing 220.

In an embodiment, as the second housing 220 rotates about the hinge 230, a rear surface of the second housing 220 and a rear surface of the first housing 210 may face each other. In an embodiment, as the second housing 220 rotates about the hinge 230, the rear camera module 180-2 disposed on the front surface of the second housing 220 may also rotate.

In an embodiment, in the form illustrated in FIG. 6-1, the electronic device 101 may acquire an image of a rear direction by using the rear camera module 180-2.

In an embodiment, in the form illustrated in FIG. 6-2, the electronic device 101 may acquire an image of a front direction by using the rear camera module 180-2.

In an embodiment, referring to FIG. 6-4 to FIG. 6-6, the display 160 may be disposed on the front surface of the electronic device 101. For example, the display 160 may be disposed on the front surfaces of the first housing 210 and the second housing 220, and due to a size difference between the first housing 210 and the second housing 220, the electronic device 101 may have the shape of "¬" when the display 160 is fully extended.

In an embodiment, as illustrated in FIG. 6-4, as the second housing 220 rotates about the hinge 230, the rear surface of the second housing 220 and the rear surface of the first housing 210 may face each other. In this case, the rear camera module 180-2 disposed on the front surface of the second housing 220 may face the rear direction of the electronic device 101 or the first housing 210. Also, the electronic device 101 may have a rectangular shape when viewed from the front direction.

In an embodiment, as illustrated in FIG. 6-5, when the display 160 is fully extended by rotating the second housing 220 about the hinge 230, the electronic device 101 may be in the shape of " "I ". In this case, the rear camera module 180-2 disposed on the front surface of the second housing 220 may face the front direction of the electronic device 101 or the first housing 210.

In an embodiment, as illustrated in FIG. 6-6, the hinge 230 may be disposed between the first housing 210 and the second housing 220, and the hinge 230 may include a hinge structure and a hinge housing.

In an embodiment, FIG. 6-4 to FIG. 6-6 illustrate that the front camera module 180-1 is arranged on the front surface of the first housing 210, but the arrangement of the front camera module 180-1 may be also omitted since the rear camera module 180-2 is rotated for the front camera module 180-1 .

In an embodiment, a positional relationship in which the rear surface of the first housing 210 and the rear surface of the second housing 220 face each other as illustrated in FIG. 6-1 and FIG. 6-4 may be a first positional relationship.

In an embodiment, a positional relationship of a state in which the flexible display 160 is fully extended by rotating the second housing 220 about the hinge 230 as illustrated in FIG. 6-2 and FIG. 6-5 may be a second positional relationship

In an embodiment, a positional relationship of a state in which an angle between the first housing 210 and the second housing 220 is larger than the first positional relationship and is smaller than the second positional relationship may be a third positional relationship.

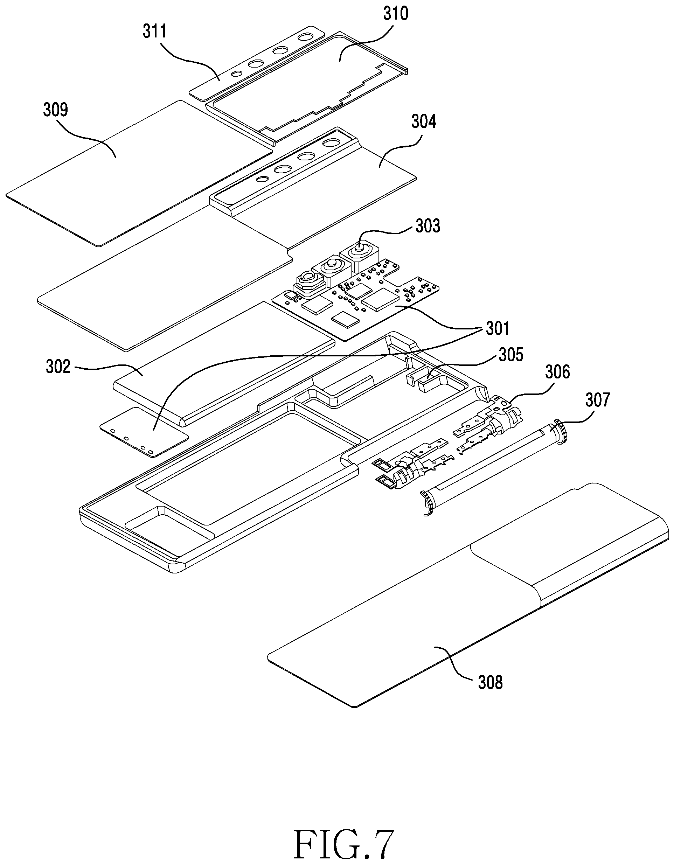

FIG. 7 is a diagram illustrating an exploded perspective view of an electronic device according to an embodiment.

In an embodiment, the electronic device 101 may include a printed circuit board (PCB) 301. In an embodiment, a battery 302 may be disposed on the PCB 301. Also, a rear camera module 303 may be disposed on the PCB 301. In an embodiment, the PCB 301, the battery 302, and the rear camera module 303 may be included inside a first housing (e.g., the first housing 210).

In an embodiment, a front housing 305 and a rear housing 304 may form an outer boundary of the first housing (e.g., the first housing 210).

In an embodiment, a hinge structure 306 and a hinge housing 307 may be coupled to an edge (e.g., the third edge of FIG. 3) of the first housing (e.g., the first housing 210) including the front housing 305 and the rear housing 304. The hinge structure 306 and the hinge housing 307 may be structures included in a hinge (e.g., the hinge 230).

In an embodiment, a second housing 310 may be coupled to the first housing (e.g., the first housing 210) including the front housing 305 and the rear housing 304, through the hinge 230 including the hinge structure 306 and the hinge housing 307. In an embodiment, the second housing 310 may correspond to the aforementioned second housing 220.

In an embodiment, a housing cover 309 and a camera cover 311 may be disposed on the rear housing 304 of the first housing (e.g., the first housing 210). For example, the housing cover 309 may prevent damages from the external by covering the rear housing 304. The camera cover 311 may protect the rear camera module 303 from external substances or shocks.

In an embodiment, a display 308 may be disposed on the front housing 305 and the second housing 310. The display 308 may be a bendable flexible display, and may correspond to the display 160.

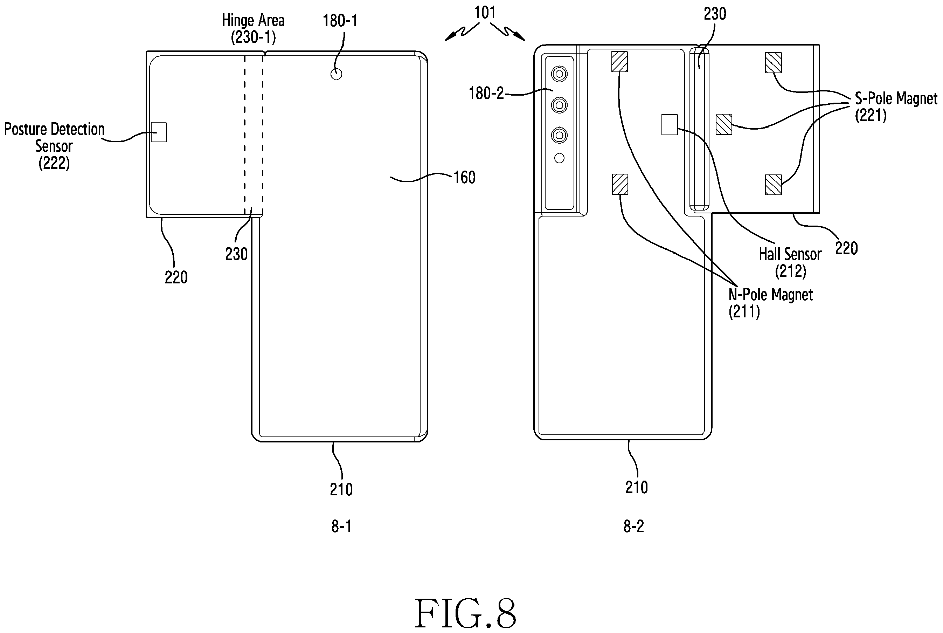

FIG. 8 is a diagram specifically illustrating a structure of an electronic device according to an embodiment.

In an embodiment, referring to FIG. 8-1, the electronic device 101 may include a sensor module (e.g., the sensor module 176), and the sensor module (e.g., the sensor module 176) may include at least a Hall sensor 212 and a posture detection sensor 222.

In an embodiment, the electronic device 101 may identify a positional relationship (or state) of the second housing 220 with respect to the first housing 210 by using the Hall sensor 212 under the control of a processor (e.g., the processor 120). For example, when a rear surface of the second housing 220 is in contact with a rear surface of the first housing 210, the electronic device 101 may identify that it is a positional relationship before the display 160 is extended, based on the Hall sensor 212 under the control of the processor (e.g., the processor 120). For another example, when the rear surface of the second housing 220 forms an angle of 180 degrees with the rear surface of the first housing 210, the electronic device 101 may identify that it is a positional relationship in which the display 160 is fully extended, based on the Hall sensor 212 under the control of the processor (e.g., the processor 120). Also, the electronic device 101 may also identify a state between the before-extended positional relationship and the fully-extended positional relationship, based on the Hall sensor 212 according the control of the processor 120.

In an embodiment, the Hall sensor 212 may identify the strength of a magnetic force by a magnet. The Hall sensor 212 may identify a data value obtained by mapping a previously inputted strength and angle of the magnet, by using the identified strength of the magnetic force. By identifying the data value, the Hall sensor 212 may determine an angle of unfolding between the first housing 210 and the second housing 220.

In an embodiment, the electronic device 101 may identify the posture of the electronic device 101 by using the posture detection sensor 222 under the control of the processor (e.g., the processor 120). For example, the posture detection sensor 222 may identify a posture change according an inclination (or angle) and/or spatial coordinate, with respect to the ground, of the electronic device 101.

In an embodiment, in the electronic device 101, at least one separate posture detection sensor (not shown) different from the illustrated posture detection sensor 222 may be disposed at a different location (e.g., the PCB 301 under the first housing 210). The at least one separate posture detection sensor (not shown) may be disposed at a location corresponding to a location where the posture detection sensor 222 is disposed, and in a state where the display 160 is extended, the posture detection sensor 222 and the at least one separate posture detection sensor (not shown) may acquire the same direction data. Also, in a state in which the display 160 is not extended, the posture detection sensor 222 and the at least one separate posture detection sensor (not shown) may acquire different direction data. The electronic device 101 may identify a degree and state (or a posture change of the electronic device 101) of extension of the display 160, based on the posture detection sensor 222 and the at least one separate posture detection sensor (not shown), under the control of the processor (e.g., the processor 120).

In an embodiment, the arrangement of the Hall sensor 212 and/or the posture detection sensor 222 is not limited to FIG. 8-1 and FIG. 8-2 and may not have a limitation.

In an embodiment, referring to FIG. 8-2, the electronic device 101 may include magnets. For example, N-pole magnets 211 may be disposed on the rear surface of the first housing 210 of the electronic device 101, and S-pole magnets 221 may be disposed on the rear surface of the second housing 220. Since the N-pole magnets 211 and the S-pole magnets 221 are disposed in the respective housings (e.g., the first housing 210 and the second housing 220), a magnetic force may act wherein a state in which the rear surface of the second housing 220 faces the rear face of the first housing 210 is maintained.

In an embodiment, a hinge area 230-1 may exist in a display area of the display 160, and may also be referred to as a side area. In an embodiment, the hinge area 230-1 may be an area on the display 160 corresponding to an area where the hinge 230 connecting the first housing 210 and the second housing 220 exists. The aforementioned hinge area (or side area) 230-1 will be described later.

In an embodiment, the locations of the N-pole magnets 211 and the S-pole magnets 221 disposed in the electronic device 101 are one example, and an embodiment may not be limited thereto.

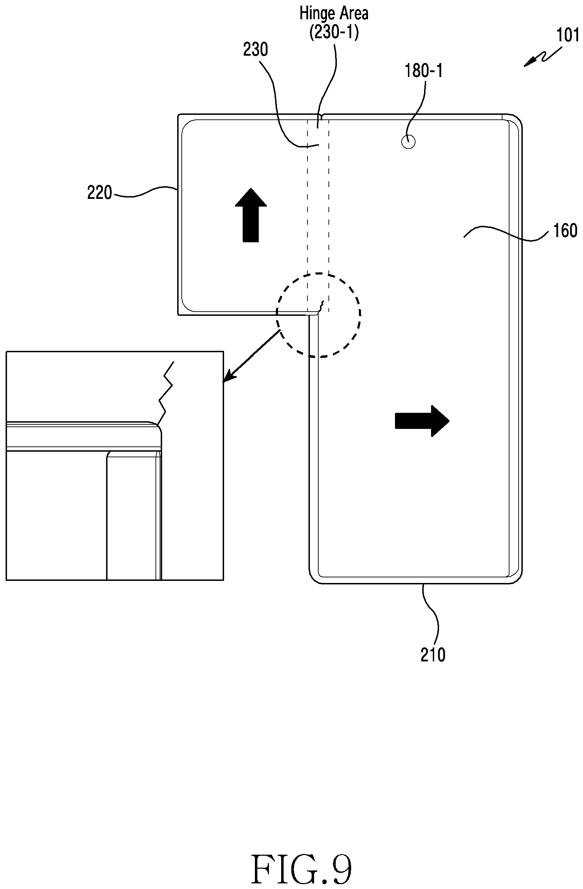

FIG. 9 to FIG. 11 are diagrams for explaining a reinforcement structure of an electronic device according to an embodiment.

In an embodiment, the second housing 220 of the electronic device 101 may be coupled to the first housing 210 to be rotatable with respect to the first housing 210 about the hinge 230.

In an embodiment, while the second housing 220 rotates about the hinge 230, the display 160 disposed on the first housing 210 and the second housing 220 may be affected by an external force. For example, as illustrated in FIG. 9, the display 160 may be subjected to an external force caused by the rotation of the second housing 220, in the direction of force displayed on the display 160.

In an embodiment, as described above, when the force is applied on the display 160, damage such as a crack may occur in the hinge area 230-1 of the display 160.

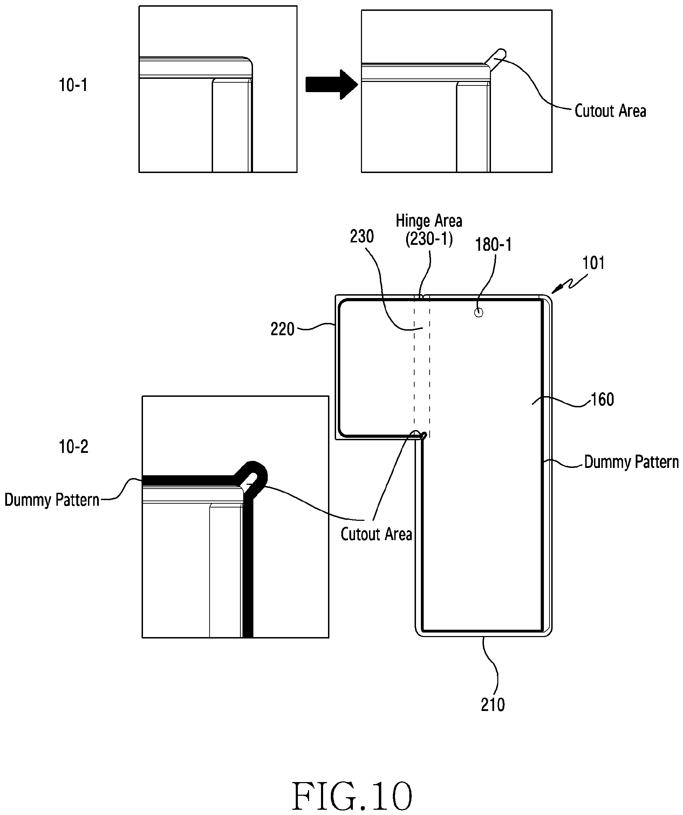

According to an embodiment, FIG. 10-1 illustrates a structure in which a cutout area is formed in the electronic device 101 in order to prevent damage occurring in the hinge area 230-1 of FIG. 9.

In an embodiment, in order to prevent damage caused by the external force resulting from the rotation of the second housing 220 as illustrated in FIG. 9, the cutout area may be formed by cutting out in advance a portion where damage such as a crack is expected to occur in the display 160.

According to an embodiment, FIG. 10-2 illustrates a structure in which a dummy pattern is formed together with the cutout area of the electronic device 101.

In an embodiment, the electronic device 101 may include the cutout area in the display 160, and include the dummy pattern formed along edges of the electronic device 101.

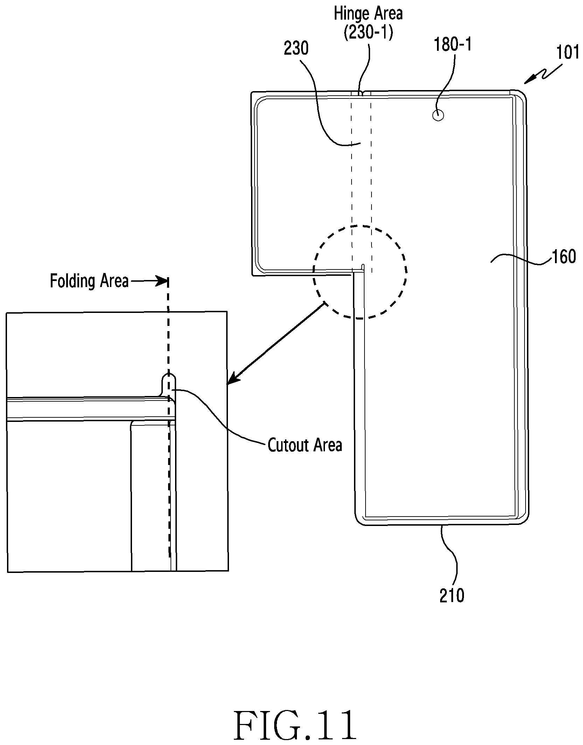

In an embodiment, referring to FIG. 11, in order to prevent in advance damage caused by the external force caused by the rotation of the second housing 220 about the hinge 230, the cutout area formed by cutting out in advance a part of the display 160 in a direction parallel to the hinge 230 may be formed.

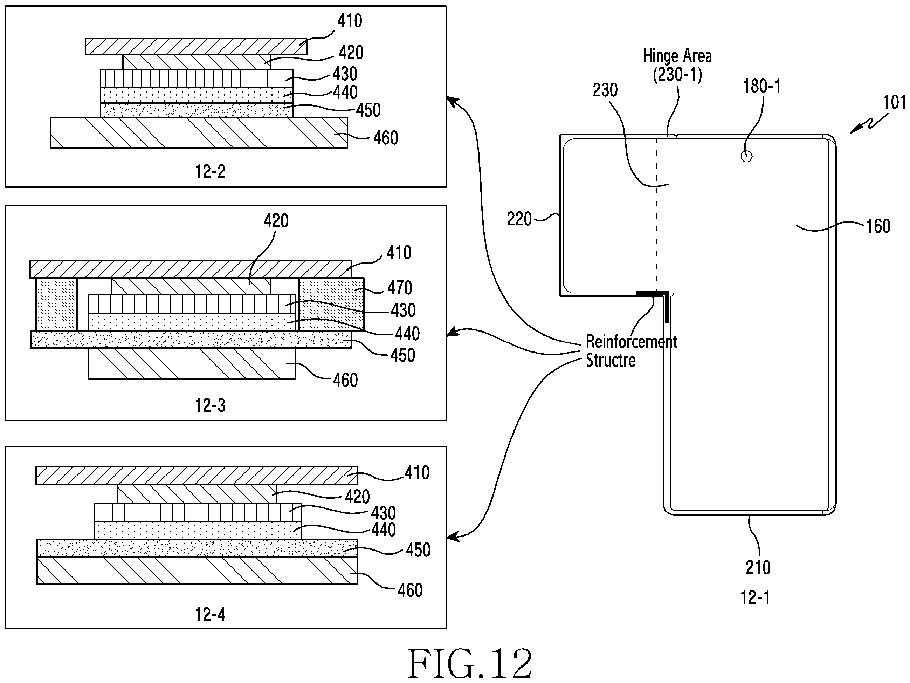

FIG. 12 is a diagram for explaining a reinforcement structure of an electronic device according to an embodiment.

According to an embodiment, FIG. 12-2 to FIG. 12-4 illustrate crosssections of a laminated reinforcement structure of the electronic device 101 of FIG. 12-1.

According to an embodiment, as described with reference to FIG. 9 to FIG. 11, the second housing 220 of the electronic device 101 rotates about the hinge 230, and the external force resulting from the rotation of the second housing 220 acts, so damage may occur in the hinge area 230-1 of the display 160.

According to an embodiment, the damage in the hinge area 230-1 may be resolved by applying the laminated reinforcement structure.

According to an embodiment, the laminated reinforcement structure may be a laminated structure in which a polyimide (PI) layer 450 is disposed on a lower metal layer 460, a display layer 440 on the PI layer 450, a shock absorbing layer 430 on the display layer 440, an ultra-thin glass (UTG) layer 420 on the shock absorbing layer 430, and a protective layer 410 on the ultra-thin glass (UTG) layer 420.

In an embodiment, referring to FIG. 12-2, in the laminated reinforcement structure, the reinforcement of strength against the external force may be realized by extending the lower metal layer 460 to the outermost part of the reinforcement structure.

In an embodiment, referring to FIG. 12-3, in the laminated reinforcement structure, a space may be formed between the protective layer 410 and the PI layer 450 by extending the protective layer 410 and the PI layer 450. The reinforcement of strength against the external force may be realized by inserting a protective substrate into the formed space. The protective substrate may include a buffering material such as PSA or resin.

In an embodiment, referring to FIG. 12-4, in the laminated reinforcement structure, the reinforcement of strength against the external force may be realized by extending the protective layer 410, the PI layer 450, and the lower metal layer 460 to the outermost part of the reinforcement structure.

In an embodiment, in the laminated structure described with reference to FIG. 12, the laminated structure is one example, and an embodiment may not be limited thereto.

For example, the laminated structure may include components other than the lower metal layer 460, the PI layer 450, the display layer 440, the shock absorbing layer 430, the ultra-thin glass (UTG) layer 420, and the protective layer 410 described above, and may be implemented by omitting some of the above-described components.

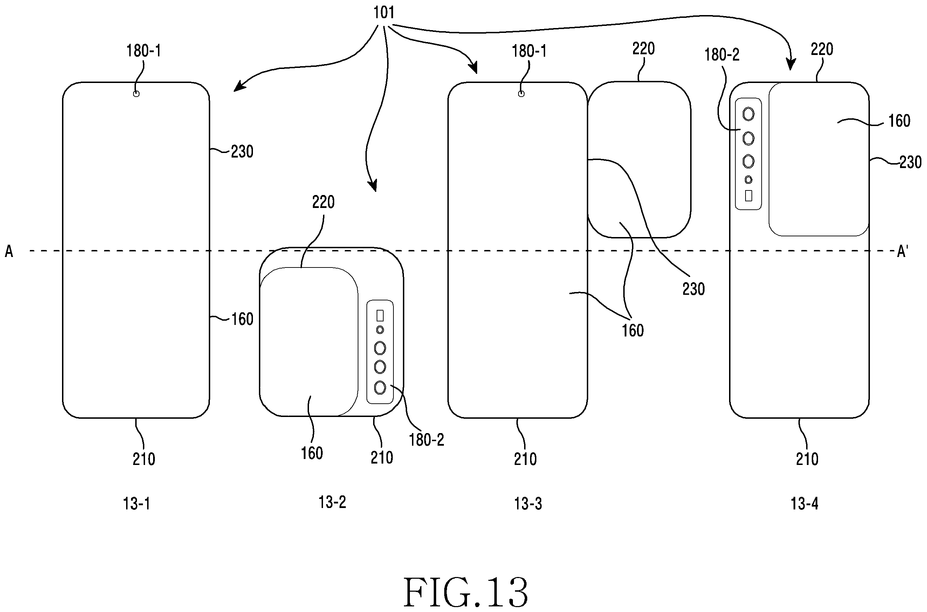

FIG. 13 is a diagram illustrating a structure of an electronic device according to another embodiment.

According to an embodiment, FIG. 13-1 to FIG. 13-4 illustrate an electronic device 501 having a structural difference from the aforementioned electronic device 101. For example, the electronic device 501 may be folded along line A-A'.

According to an embodiment, FIG. 13-1 illustrates the structure of the electronic device 501 unfolded along line A-A', and FIG. 13-2 illustrates the structure of the electronic device 501 folded along line A-A'.

In an embodiment, the electronic device 501 may include a first housing 210 and a second housing 220, and the first housing 210 and the second housing 220 may be connected through a hinge 230.

In an embodiment, a display 160 may be disposed on a front surface of the first housing 210 and a front surface of the second housing 220 of the electronic device 501.

In an embodiment, a front camera module 180-1 may be disposed on the front surface of the first housing 210 of the electronic device 501, and a rear camera module 180-2 may be disposed on a rear surface of the first housing 210.

In an embodiment, the first housing 210 of the electronic device 501 may be folded about line A-A'.

In an embodiment, the first housing 210 of the electronic device 501 may be folded or rotated in a direction perpendicular to a direction in which the second housing 220 rotates about the hinge 230.

According to an embodiment, FIG. 13-3 illustrates a structure in a state in which the display 160 is fully extended as the second housing 220 of the electronic device 501 rotates about the hinge 230.

In an embodiment, as the second housing 220 rotates with respect to the first housing 210 about the hinge 230, the second housing 220 may form an angle of 180 degrees with the first housing 210.

According to an embodiment, FIG. 13-4 illustrates the electronic device 501 of the state of FIG. 13-1 viewed from the rear.

In an embodiment, the rear camera module 180-2 may be disposed on the rear surface of the first housing 210 of the electronic device 501.

In an embodiment, the second housing 220 may rotate about the hinge 230, and the rear surface of the second housing 220 and the rear surface of the first housing 210 may face each other.

In an embodiment, the first housing 210 may be folded along line A-A', and the front surface of the second housing 220 and the rear surface of the first housing 210 may face each other.

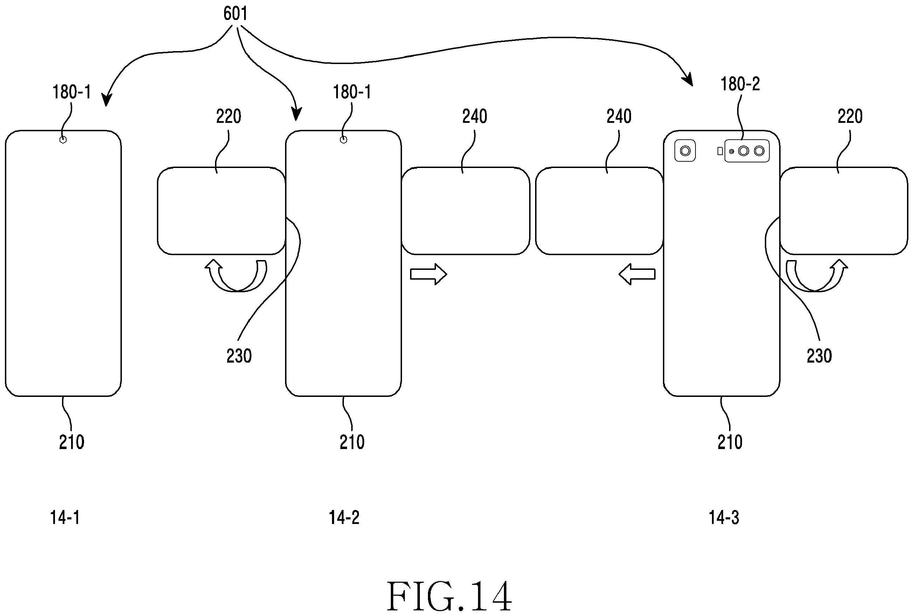

FIG. 14 is a diagram illustrating a structure of an electronic device according to another embodiment.

According to an embodiment, FIG. 14-1 to FIG. 14-3 illustrate an electronic device 601 having a structural difference from the aforementioned electronic device 101 and electronic device 501.

According to an embodiment, FIG. 14-1 illustrates a structure before the rotation and sliding of housings (e.g., a second housing 220 and a third housing 240) of the electronic device 601, and FIG. 14-2 to FIG. 14-3 illustrate structures after the rotation and sliding of the housings (e.g., the second housing 220 and the third housing 240) of the electronic device 601.

In an embodiment, the electronic device 501 may include a first housing 210, the second housing 220, and the third housing 240.

In an embodiment, the first housing 210 and the second housing 220 may be connected through a hinge 230. In an embodiment, the second housing 220 may be connected to the first housing 210 to be rotatable with respect to the first housing 210 about the hinge 230.

In an embodiment, the third housing 240 may be slid in/out with respect to the first housing 210. In an embodiment, the third housing 240 is slid in with respect to the first housing 210, whereby the third housing 240 may not be seen from the front of the electronic device 601 as illustrated in FIG. 14-1. In an embodiment, the third housing 240 is slid out with respect to the first housing 210, whereby the third housing 240 may be extended to a side opposite the second housing 220 as illustrated in FIG. 14-2 to FIG. 14-3.

In an embodiment, a front camera module 180-1 may be disposed on a front surface of the first housing 210 of the electronic device 601, and a rear camera module 180-2 may be disposed on a rear surface of the first housing 210.

In an embodiment, the rear camera module 180-2 may be disposed in an area not overlapping with an area in which the second housing 220 and the third housing 240 are rotated and slid respectively.

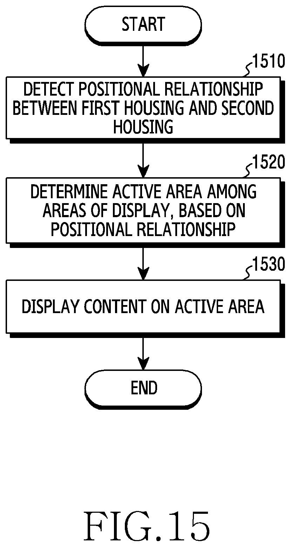

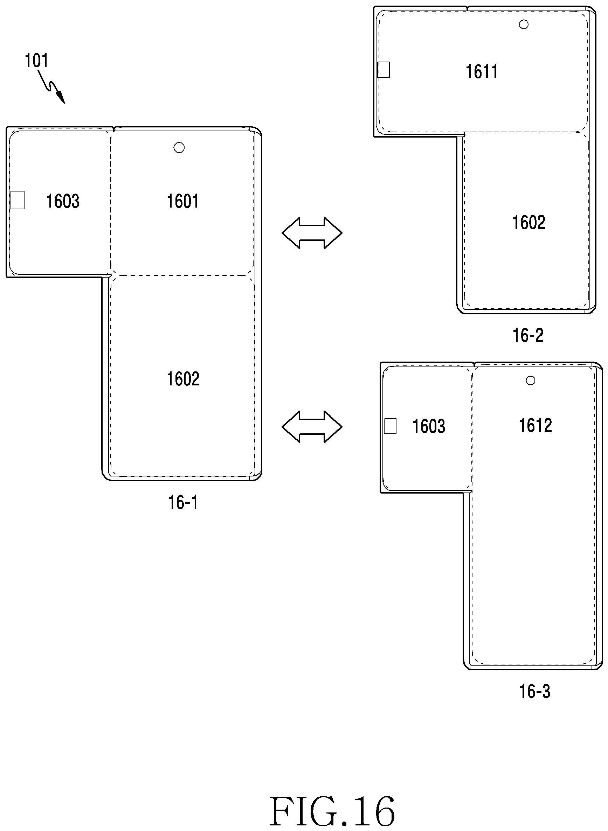

FIG. 15 is a diagram illustrating a flow of an operation of an electronic device according to an embodiment. FIG. 15 may be described with reference to areas (e.g., a first area 1601, a second area 1602, a third area 1603, a fourth area 1611, and a fifth area 1612) of a display 160 of FIG. 16.

According to an embodiment, in operation 1510, the electronic device (e.g., the electronic device 101) may detect positional relationship between a first housing (e.g., the first housing 210) and a second housing (e.g., the second housing 220).

In an embodiment, the electronic device 101 may relatively compare an angle formed between the first housing 210 and the ground and an angle formed between the second housing 220 and the ground by using the sensor module 176 under the control of the processor 120, thereby detecting (or identifying) the positional relationship between the first housing 210 and the second housing 220. For example, the electronic device 101 may compare the angle formed between the first housing 210 and the ground and the angle formed between the second housing 220 and the ground under the control of the processor 120, and detect (or identify) an angle between the first housing 210 and the second housing 220.

In an embodiment, the electronic device 101 may detect a distance between the first housing 210 and the second housing 220 by using the sensor module 176 under the control of the processor 120, and may identify an angular and positional relationship between the first housing 210 and the second housing 220, based on the detected distance.

In an embodiment, the electronic device 101 may define the positional relationship between the first housing 210 and the second housing 220, according to an angular range under the control of the processor 120. For example, when the angle formed by the first housing 210 and the second housing 220 is 0 degrees (e.g., when the rear surface of the first housing 210 and the rear surface of the second housing 220 face each other), it may be defined as a first positional relationship. For another example, when the angle formed by the first housing 210 and the second housing 220 is 180 degrees, it may be defined as a second positional relationship. Also, when the angle formed by the first housing 210 and the second housing 220 is greater than 0 degrees and is less than 180 degrees, it may be defined as a third positional relationship.

According to an embodiment, in operation 1520, the electronic device (e.g., the electronic device 101) may determine an active area among the areas of the display (e.g., the display 160), based on the positional relationship.

In an embodiment, the electronic device 101 may define a display area according an extended state (e.g., the first positional relationship to the third positional relationship) of the display 160, under the control of the processor 120. For example, when the electronic device 101 is in the first positional relationship under the control of the processor 120, it may be defined to display content in at least one of the first area 1601, the second area 1602, and the third area 1603 of the display 160. Also, the electronic device 101 may display content by combining at least two of the first area 1601, the second area 1602, and the third area 1603 of the display 160, based on user's preset settings and/or real-time settings under the control of the processor 120. The content display area under the control of the processor 120 of the electronic device 101 may not be limited as described above.

In an embodiment, when a specific area of a display (e.g., the display 160) is activated to display content under the control of the processor 120, an area where content is not displayed may be deactivated. For example, in the first positional relationship, the electronic device 101 may display content on the first area 1601, the second area 1602, or the fifth area 1612, while deactivating the third area 1603 wherein content is not displayed on the third area 1603, under the control of the processor 120. In this case, the electronic device 101 may maintain a state for reactivation of the third area 1603 while deactivating the third area 1603, under the control of the processor 120.

In an embodiment, when being to reactivate the third area 1603 under the control of the processor 120, the electronic device 101 may perform the reactivation, based on the maintained state for reactivation.

According to various embodiments, in activation of each area of the display 160, the above-described areas are examples and an embodiment may not be limited thereto. The electronic device 101 may display a user interface corresponding to the activated area, under the control of the processor 120.

According to an embodiment, in operation 1530, the electronic device (e.g., the electronic device 101) may display content in the active area.

In an embodiment, the electronic device 101 may display content in the active area determined in operation 1520, under the control of the processor 120. For example, when the first area 1601, the second area 1602, or the fifth area 1612 is activated, and the third area 1603 is deactivated wherein content is not displayed on the third area 1603, the electronic device 101 may display content on the first area 1601, the second area 1602, or the fifth area 1612, under the control of the processor 120.

According to various embodiments, in displaying content according to activation of each area of the display 160, the above-described areas are examples and an embodiment may not be limited thereto. The electronic device 101 may display content (e.g., a user interface) corresponding to active areas of various combinations, under the control of the processor 120.

FIG. 16 is a diagram illustrating an area of a display of an electronic device according to an embodiment.

In an embodiment, a first housing (e.g., the first housing 210) may include a first edge having a first length, a second edge perpendicular to the first edge and having a second length shorter than the first length, a third edge parallel to the first edge and having the first length, and a fourth edge parallel to the second edge and having the second length. For another example, the first housing (e.g., the first housing 210) may have a rectangular shape surrounded by the first edge to the fourth edge.

In an embodiment, a second housing (e.g., the second housing 220) may consist of at least an edge (e.g., a fifth edge) having a vertical length of a third length shorter than the first length along the third edge, an edge (e.g., a sixth edge) perpendicular to the edge (e.g., the fifth edge) of the vertical length of the third length and having a horizontal length of a fourth length, an edge (e.g., a seventh edge) parallel to the edge (e.g., the fifth edge) of the vertical edge of the third length and having the third length, and an edge (e.g., an eighth edge) parallel to the edge (e.g., the sixth edge) of the horizontal length of the fourth length and having the fourth length. For another example, the second housing (e.g., the second housing 220) may have a smaller rectangular shape than the first housing (e.g., the first housing 210), and may be a shape surrounded by the fifth edge to the eighth edge.

In an embodiment, the display 160 of the electronic device 101 may include a plurality of areas for displaying content.

In an embodiment, referring to FIG. 16-1, the display 160 may include the first area 1601, the second area 1602, and the third area 1603. For example, the first area 1601 may be an area corresponding to the second length and the third length. The second area 1602 may be a remaining area other than the first area among the areas of the first housing (e.g., the first housing 210). The third area 1603 may be an area corresponding to the second housing (e.g., the second housing 220).

In an embodiment, the electronic device 101 may display content on at least one of the first area 1601, the second area 1602, and the third area 1603, under the control of the processor 120.

In an embodiment, referring to FIG. 16-2, the electronic device 101 may display content on the fourth area 1611 corresponding to an area including the first area 1601 and the third area 1603, under the control of the processor 120. In an embodiment, the electronic device 101 may also display content on the second area 1602 under the control of the processor 120.

In an embodiment, referring to FIG. 16-3, the electronic device 101 may display content on the fifth area 1612 corresponding to an area including the first area 1601 and the second area 1602, under the control of the processor 120. In an embodiment, the electronic device 101 may also display content on the third area 1603 under the control of the processor 120.

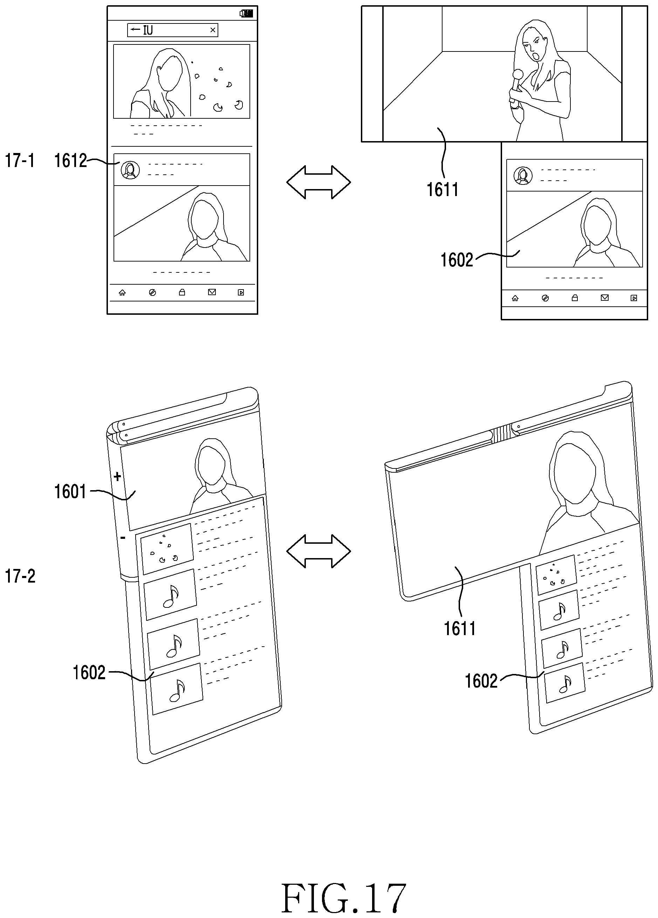

FIG. 17 is a diagram illustrating a state in which content is displayed on a display area of an electronic device according to another embodiment.

In an embodiment, referring to FIG. 17-1, the electronic device 101 may display content on the fifth area 1612 of the display 160, under the control of the processor 120.

In an embodiment, the electronic device 101 may identify a positional relationship (e.g., the first positional relationship) between a first housing (e.g., the first housing 210) and a second housing (e.g., the second housing 220) by using the sensor module 176, under the control of a processor (e.g., the processor 120). For example, the first positional relationship may be a positional relationship in which respective rear surfaces of the first housing (e.g., the first housing 210) and the second housing (e.g., the second housing 220) face each other. For another example, the first positional relationship may be a positional relationship before a display (e.g., the display 160) of the electronic device 101 is extended.

In an embodiment, when the display (e.g., the display 160) is fully extended by rotating the second housing (e.g., the second housing 220) about a hinge (e.g., the hinge 230), the electronic device 101 may identify a positional relationship (e.g., the second positional relationship) between the first housing (e.g., the first housing 210) and the second housing (e.g., the second housing 220) by using the sensor module 176 under the control of the processor (e.g., the processor 120). For example, the second positional relationship may be a positional relationship in which the first housing (e.g., the first housing 210) and the second housing (e.g., the second housing 220) form an angle of 180 degrees. For another example, the second positional relationship may be a positional relationship in which the display (e.g., the display 160) of the electronic device 101 is fully extended.

In an embodiment, when identifying the first positional relationship under the control of the processor (e.g., the processor 120), the electronic device 101 may display content on at least the fifth area 1612.

In an embodiment, when identifying the second positional relationship under the control of the processor (e.g., the processor 120), the electronic device 101 may display different contents on the second area 1602 and the fourth area 1611, respectively.

In an embodiment, referring to FIG. 17-2, when identifying the first positional relationship under the control of the processor (e.g., the processor 120), the electronic device 101 may display different contents on the first area 1601 and the second area 1602, respectively.

In an embodiment, when identifying the second positional relationship under the control of the processor (e.g., the processor 120), the electronic device 101 may extend content displayed on the first area 1601 to correspond to an area of the fourth area 1611, and display the content. Also, the electronic device 101 may maintain content displayed on the second area 1602 under the control of the processor (e.g., the processor 120).

In an embodiment, when identifying the first positional relationship while performing an operation following the identifying of the second positional relationship under the control of the processor (e.g., the processor 120), the electronic device 101 may display content on the areas (e.g., the fifth area 1612 of FIG. 17-1, the first area 1601 and second area 1602 of FIG. 17-2) of the display (e.g., the display 160) corresponding to the first positional relationship.

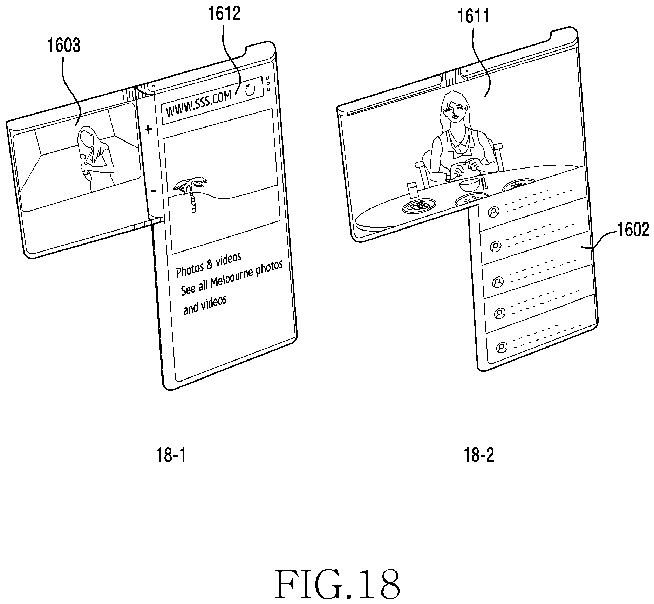

FIG. 18 is a diagram illustrating a state in which content is displayed on a display area of an electronic device according to another embodiment.

In an embodiment, referring to FIG. 18-1, when identifying the second positional relationship under the control of a processor (e.g., the processor 120), the electronic device 101 may display different contents on the third area 1603 and the fifth area 1612. For example, the electronic device 101 may display a video on the third area 1603 and display a web browser on the fifth area 1612, under the control of the processor 120.

In an embodiment, referring to FIG. 18-2, when identifying the second positional relationship under the control of the processor (e.g., the processor 120), the electronic device 101 may display different contents on the second area 1602 and the fourth area 1611. For example, the electronic device 101 may display a web browser on the second area 1602 and display a video on the fourth area 1611, under the control of the processor 120.

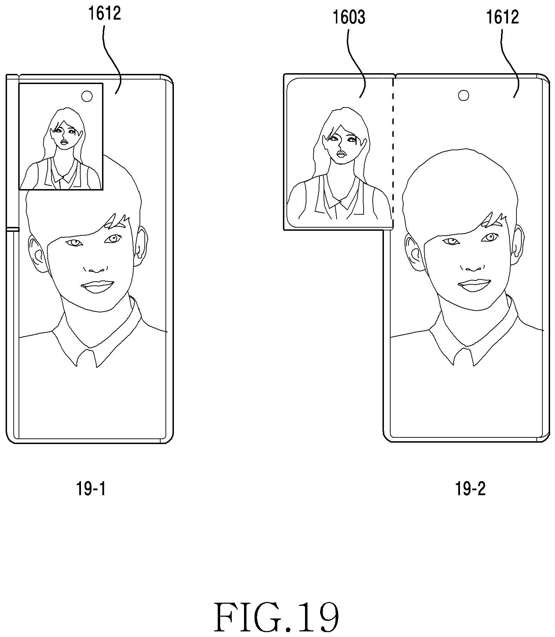

FIG. 19 is a diagram illustrating a state in which content is displayed on a display area of an electronic device according to another embodiment. FIG. 19 illustrates a change of a display area of a display (e.g., the display 160) according a positional relationship between a first housing (e.g., the first housing 210) and a second housing (e.g., the second housing 220), in performing a video call.

In an embodiment, referring to FIG. 19-1, when identifying the first positional relationship under the control of the processor (e.g., the processor 120), the electronic device 101 may display a user's image and the other party's image together on the fifth area 1612, in performing a video call. For example, the electronic device 101 may display the user's image on a small part of the fifth area 1612 of the display 160 and display the other party's image on a large part of the fifth area 1612, under the control of the processor 120.

In an embodiment, referring to FIG. 19-2, when identifying the second positional relationship under the control of the processor (e.g., the processor 120), the electronic device 101 may display the other party's image on the fifth area 1612 and display the user's image on the third area 1603, in performing a video call.

In an embodiment, when identifying the first positional relationship while performing an operation resulting from identifying the second positional relationship under the control of the processor (e.g., the processor 120), the electronic device 101 may display content in an area (e.g., the fifth area 1612 of FIG. 19-1, and the third area 1603 and fifth area 1612 of FIG. 19-2) of the display (e.g., the display 160) corresponding to the first positional relationship.

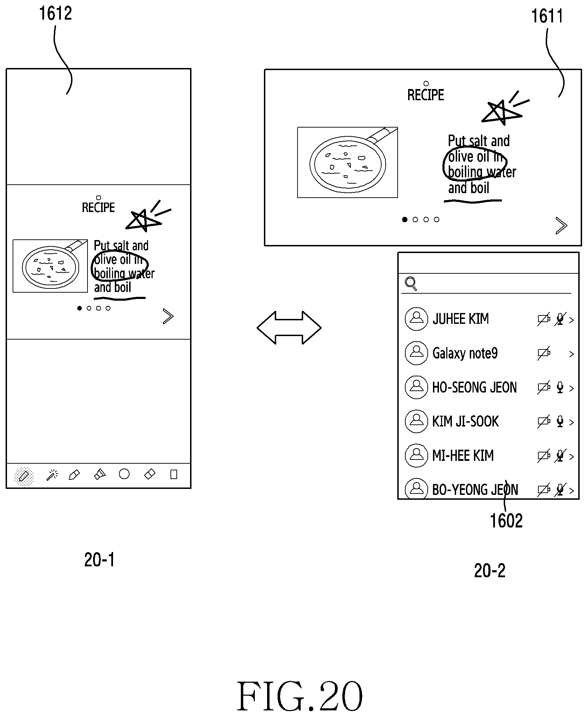

FIG. 20 is a diagram illustrating a state in which content is displayed on a display area of an electronic device according to another embodiment. FIG. 20 illustrates a change of the display area of a display (e.g., the display 160) according a positional relationship between a first housing (e.g., the first housing 210) and a second housing (e.g., the second housing 220), in performing a video conference.

In an embodiment, referring to FIG. 20-1, when identifying the first positional relationship under the control of a processor (e.g., the processor 120), the electronic device 101 may display shared content on the fifth area 1612, in performing a video conference.

In an embodiment, referring to FIG. 20-2, when identifying the second positional relationship under the control of the processor (e.g., the processor 120), the electronic device 101 may display shared content on the fourth area 1611 and display video conference-related information on the second area 1602, in performing a video call.

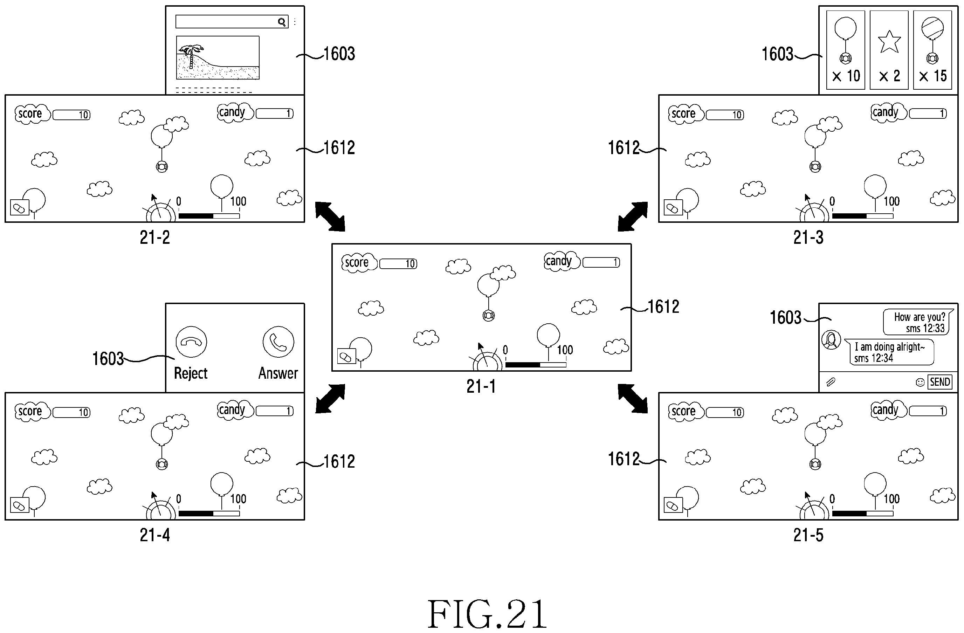

FIG. 21 is a diagram illustrating a state in which content is displayed on a display area of an electronic device according to another embodiment.

FIG. 21 illustrates a change of the display area of a display (e.g., the display 160) according a positional relationship between a first housing (e.g., the first housing 210) and a second housing (e.g., the second housing 220), in playing a game by using the electronic device 101.

In an embodiment, referring to FIG. 21-1, when identifying the first positional relationship under the control of a processor (e.g., the processor 120), the electronic device 101 may display game content on the fifth area 1612 during the game.

In an embodiment, FIG. 21-2 to FIG. 21-5 illustrate states in which a user performs other tasks by extending the display (e.g., the display 160), while playing the game by using the electronic device 101. When identifying the second positional relationship under the control of the processor (e.g., the processor 120), the electronic device 101 may display different contents on the third area 1603 according to user's preset settings and/or real-time settings.

In an embodiment, the user may set content to be displayed on the third area 1603 while playing the game, by the preset settings and/or real-time settings. For example, the user may set content to be displayed on the third area 1603 among contents such as a web browser, a phone screen, a messenger screen, and a video screen. The electronic device 101 may display the set content on the third area 1603, under the control of the processor 120.

In an embodiment, referring to FIG. 21-2, when identifying the second positional relationship under the control of the processor (e.g., the processor 120), the electronic device 101 may display the web browser on the third area 1603.

In an embodiment, referring to FIG. 21-3, when identifying the second positional relationship under the control of the processor (e.g., processor 120), the electronic device 101 may display the video screen on the third area 1603.

In an embodiment, referring to FIG. 21-4, when identifying the second positional relationship under the control of the processor (e.g., the processor 120), the electronic device 101 may display the messenger screen on the third area 1603.

In an embodiment, referring to FIG. 21-5, when identifying the second positional relationship under the control of the processor (e.g., the processor 120), the electronic device 101 may display the phone screen on the third area 1603.

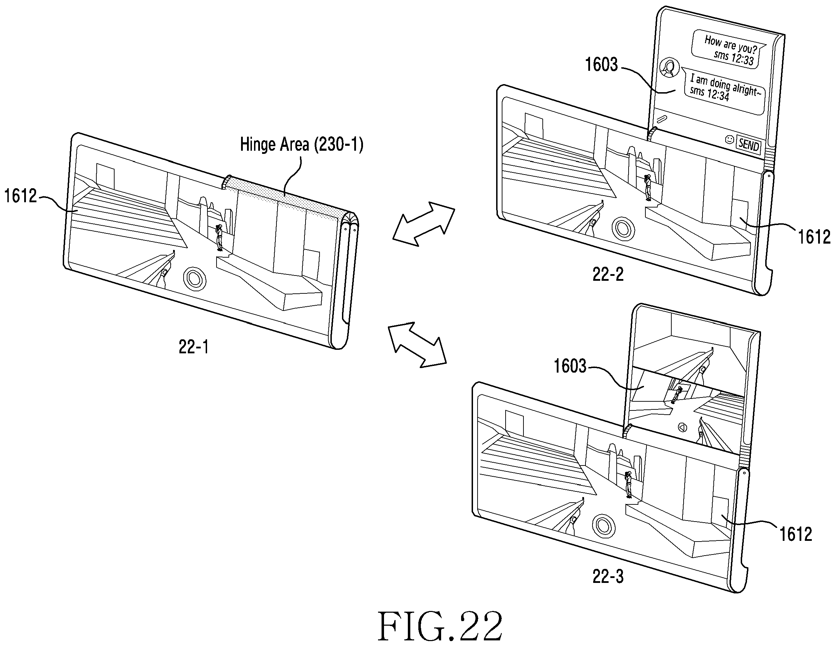

FIG. 22 is a diagram illustrating a state in which content is displayed on a display area of an electronic device according to another embodiment.

In an embodiment, the electronic device 101 may display a notification through a hinge area (e.g., the hinge area 230-1) while displaying content on the fifth area 1612 of a display (e.g., display 160) area under the control of a processor (e.g., the processor 120).

In an embodiment, a user may previously set and/or real-time set content corresponding to an alarm displayed on the hinge area (e.g., the hinge area 230-1) of the display (e.g., the display 160). For example, the user may set content such as a messenger screen or a video screen, as the content corresponding to the alarm.

In an embodiment, when identifying that a positional relationship between a first housing (e.g., the first housing 210) and a second housing (e.g., the second housing 220) is the second positional relationship under the control of the processor (e.g., the processor 120), the electronic device 101 may display the content corresponding to the alarm on the third area 1603.

In an embodiment, referring to FIG. 22-1, the electronic device 101 may display the set content corresponding to the alarm on the hinge area (e.g., the hinge area 230-1) under the control of the processor 120.

In an embodiment, referring to FIG. 22-2, when the user sets the messenger screen as the content corresponding to the alarm, the electronic device 101 may display the messenger screen on the third area 1603 if identifying the second positional relationship under the control of the processor (e.g., the processor 120).

In an embodiment, referring to FIG. 22-3, when the user sets the video screen as the content corresponding to the alarm, the electronic device 101 may display the video screen on the third area 1603 if identifying the second position relationship under the control of the processor (e.g., the processor 120).

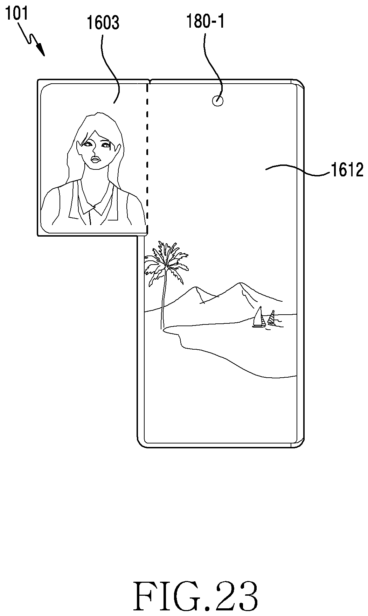

FIG. 23 is a diagram illustrating a state in which an image is displayed on a display area of an electronic device according to an embodiment.

In an embodiment, the electronic device 101 may display an image acquired through a camera module (e.g., the camera module 180) on the third area 1603 and the fifth area 1612 under the control of a processor (e.g., the processor 120).

In an embodiment, the electronic device 101 may display an image acquired through a front camera module (e.g., the front camera module 180-1) on the third area 1603 of a display (e.g., the display 160) under the control of the processor (e.g., the processor 120). Also, the electronic device 101 may display an image acquired through a rear camera module (e.g., the rear camera module 180-2) on the fifth area 1612 of the display (e.g., the display 160) under the control of the processor (e.g., the processor 120).

In another embodiment, the electronic device 101 may display an image acquired through the front camera module (e.g., the front camera module 180-1), on the fifth area 1612 of the display (e.g., the display 160) under the control of the processor (e.g., the processor 120). Also, the electronic device 101 may display an image acquired through the rear camera module (e.g., the rear camera module 180-2) on the third area 1603 of the display (e.g., the display 160) under the control of the processor (e.g., the processor 120).

In the above-described embodiments, areas (e.g., the third area 1603 and the fifth area 1612) for displaying images acquired by the front camera module (e.g., the front camera module 180-1) and/or the rear camera module (e.g., the rear camera module 180-2) may be set according to user's setting, and may have no limitation in a corresponding relationship.

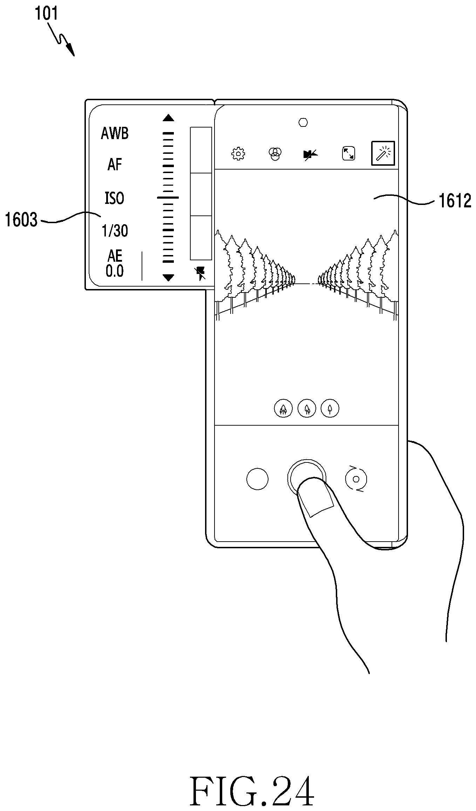

FIG. 24 is a diagram illustrating a state in which an image and a user interface are displayed on a display area of an electronic device according to an embodiment.

In an embodiment, the electronic device 101 may display a preview image acquired through the camera module 180 on the fifth area 1612 and display contents related to camera functions and options on the third area 1603, under the control of a processor (e.g., the processor 120).

In an embodiment, the electronic device 101 may display the contents related to the camera functions and options, such as AWB, AF, AE, exposure speed, and shutter speed, on the third area 1603 of the electronic device 101.

In an embodiment, when a user changes the camera functions and options through the content displayed on the third area 1603, the electronic device 101 may reflect in real time the changed functions and options on the preview image displayed on the fifth area 1612, under the control of the processor (e.g., the processor 120).

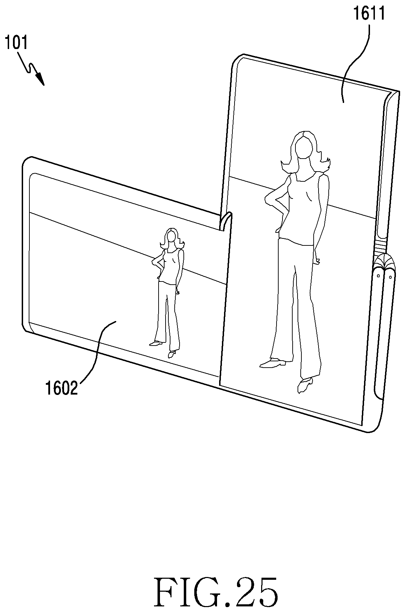

FIG. 25 is a diagram illustrating a state in which images of different attributes are displayed on a display area of an electronic device according to an embodiment.

In an embodiment, the electronic device 101 may display images of different view angles acquired through a camera module (e.g., the camera module 180) on areas of a display (e.g., the display 160), respectively. For example, the electronic device 101 may display an image of a first view angle acquired through the camera module (e.g., the camera module 180) on the second area 1602, under the control of a processor (e.g., the processor 120). Also, the electronic device 101 may display an image of a second view angle that is narrower than the first view angle acquired through the camera module (e.g., the camera module 180) on the fourth area 1611, under the control of the processor (e.g., the processor 120).

In various embodiments, when the electronic device 101 displays images of different view angles on areas of the display (e.g., the display 160) under the control of the processor (e.g., the processor 120), the above-described areas (e.g., the second area 1602 and the fourth area 1611) are examples, and an embodiment may not be limited thereto.

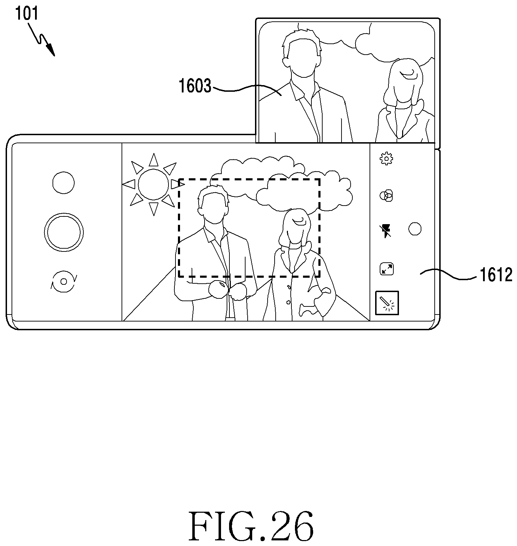

FIG. 26 is a diagram illustrating a state in which images of different attributes are displayed on a display area of an electronic device according to another embodiment.

In an embodiment, the electronic device 101 may display images of different magnifications acquired through a camera module (e.g., the camera module 180) on areas of a display (e.g., the display 160), respectively.

In an embodiment, the electronic device 101 may display a preview image acquired through the camera module (e.g., the camera module 180) on the fifth area 1612 of the display (e.g., the display 160), under the control of a processor (e.g., the processor 120).

In an embodiment, the electronic device 101 may display a zoom-in image magnified at a higher magnification than the preview image displayed on the fifth area 1612, on the third area 1603 of the display (e.g., the display 160), under the control of the processor (e.g., the processor 120).

In an embodiment, the electronic device 101 may display a zoom-in image magnified at a higher magnification than the preview image displayed on the fifth area 1612, on the third area 1603 of the display (e.g., the display 160), under the control of the processor (e.g., the processor 120).

In another embodiment, the electronic device 101 may display a zoomout image having a lower magnification than the preview image displayed on the fifth area 1612, on the third area 1603 of the display (e.g., the display 160), under the control of the processor (e.g., the processor 120).

In various embodiments, when the electronic device 101 displays images of different magnifications on areas of the display (e.g., the display 160) under the control of the processor (e.g., the processor 120) respectively, the above-mentioned areas (e.g., the third area 1603 and the fifth area 1612) are examples, and an embodiment may not be limited thereto.

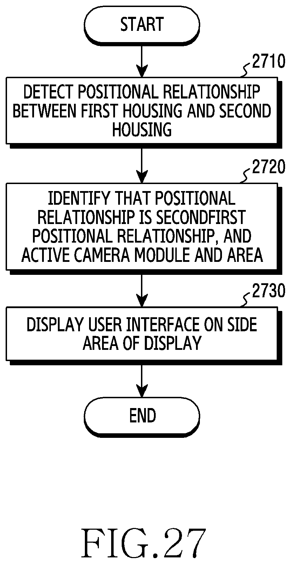

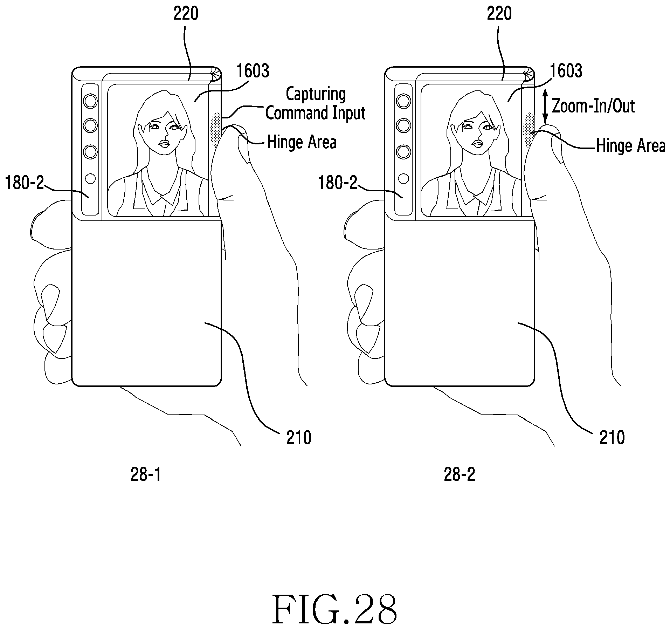

FIG. 27 illustrates a flow in which an electronic device displays a user interface on a side area of a display according to an embodiment. The flow of FIG. 27 will be described with reference to FIG. 28 illustrating a state in which the electronic device displays the user interface on the side area of the display.

In operation 2710 of an embodiment, the electronic device 101 may detect a positional relationship between a first housing (e.g., the first housing 210) and a second housing (e.g., the second housing 220).

In an embodiment, the electronic device 101 may detect the positional relationship (e.g., the first positional relationship or the second positional relationship) between the first housing 210 and the second housing 220 by using a sensor module (e.g., the sensor module 176), under the control of a processor (e.g., the processor 120).

In operation 2720 of an embodiment, when the positional relationship is the first positional relationship, the electronic device 101 may identify an activated camera module and area.

In an embodiment, when identifying that the positional relationship between the first housing 210 and the second housing 220 is the first positional relationship under the control of the processor (e.g., the processor 120), the electronic device 101 may identify an activated camera module among camera modules (e.g., the front camera module 180-1 and the rear camera module 180-2). For example, referring to FIG. 28-1 and FIG. 28-2, the electronic device 101 may identify that the positional relationship between the first housing 210 and the second housing 220 is the first positional relationship and may identify that the activated camera module is the rear camera module 180-2, under the control of the processor 120.

In an embodiment, when identifying that the positional relationship between the first housing 210 and the second housing 220 is the first positional relationship under the control of the processor (e.g., the processor 120), the electronic device 101 may identify an activated area among areas of the display (e.g., the display 160). For example, referring to FIG. 28-1 and FIG. 28-2, the electronic device 101 may identify that the activated area among the areas of the display (e.g., the display 160) is the third area 1603, under the control of the processor 120.

In operation 2730 of an embodiment, the electronic device 101 may display a user interface on the side area (e.g., the hinge area 230-1) of the display (e.g., the display 160).

In an embodiment, the electronic device 101 may display a user interface on the hinge area 230-1, which is the side area of the display 160 in the first positional relationship, under the control of the processor (e.g., the processor 120). For example, as illustrated in FIG.28-1, the electronic device 101 may display a user interface capable of inputting a capturing command on the hinge area 230-1 under the control of the processor (e.g., the processor 120). For another example, as illustrated in FIG. 28-2, the electronic device 101 may display a user interface capable of inputting zoom in/out on the hinge area 230-1 under the control of the processor (e.g., the processor 120).

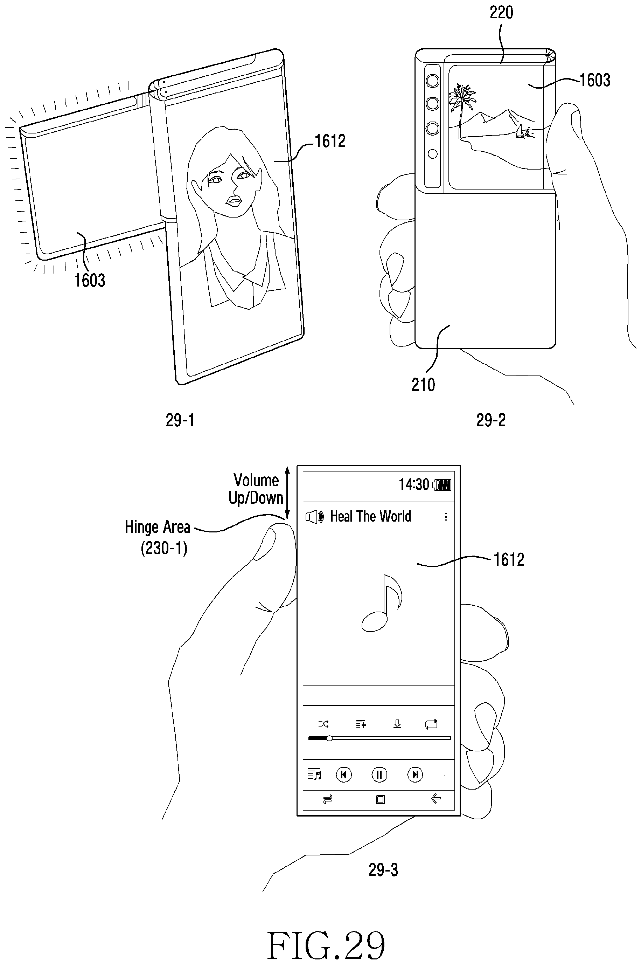

FIG. 29 is a diagram illustrating an effect of an additional function of a display area of an electronic device, according to an embodiment.

In an embodiment, referring to FIG. 29-1, when a user takes a selfportrait, one of display (e.g., display 160) areas may perform a lighting function. For example, the electronic device 101 may display an image acquired through a front camera module (e.g., the front camera module 180-2) on the fifth area 1612, under the control of a processor (e.g., the processor 120). Also, in this case, the electronic device 101 may perform a flash function for lighting on the third area 1603, under the control of the processor (e.g., the processor 120).

In an embodiment, referring to FIG. 29-2, the electronic device 101 may display set content on the fifth area 1612 and may display a CMF image on the non-activated third area 1603, under the control of the processor (e.g., the processor 120).

In an embodiment, referring to FIG. 29-3, the electronic device 101 may display a user interface capable of inputting volume up/down on the hinge area 230-1 under the control of the processor (e.g., the processor 120).

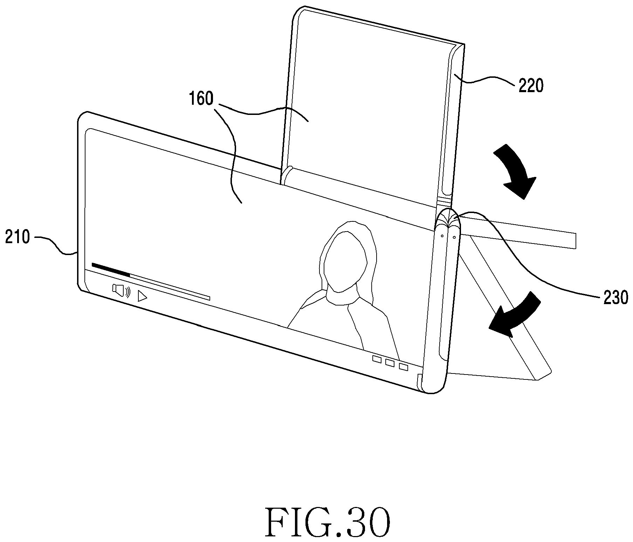

FIG. 30 is a diagram illustrating an additional function according a structure of an electronic device according to an embodiment.

In an embodiment, the electronic device 101 may include a first housing 210 and a second housing 220, and the second housing 220 may be rotatable with respect to the first housing 210 about a hinge 230.

In an embodiment, the second housing 220 of the electronic device 101 may be free-stopped between the first positional relationship and the second positional relationship. For example, the second housing 220 may be fixed at an angle between 0 degrees and 180 degrees formed by the second housing 220 and the first housing 210.

In an embodiment, even while the second housing 220 rotates, the electronic device 101 may display content on a display (e.g., the display 160), under the control of a processor (e.g., the processor 120).

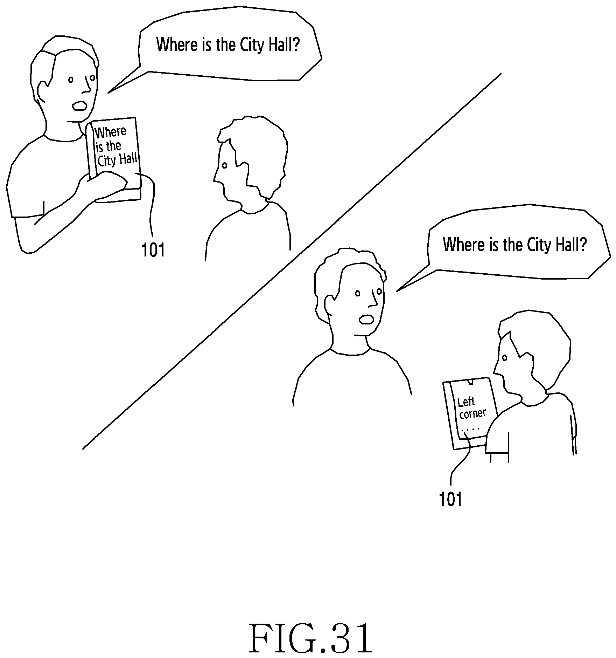

FIG. 31 is a diagram illustrating an effect of an additional function of a display area of an electronic device according to an embodiment.

In an embodiment, a user may perform real-time interpretation/translation through a plurality of areas included in a display (e.g., the display 160) of the electronic device 101.

In an embodiment, when receiving a user input being based on a first language, the electronic device 101 may display an output being based on a second language on an area where the other party is located among areas of the display (e.g., the display 160), under the control of a processor (e.g., the processor 120).

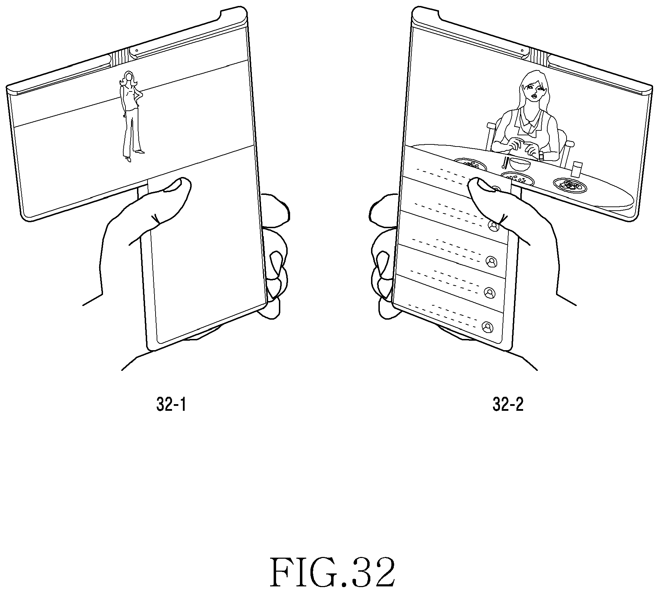

FIG. 32 is a diagram illustrating a screen display of a display area according a handling state of an electronic device according to an embodiment. FIG. 32-1 illustrates a state in which a user handles the electronic device 101 with his left hand, and FIG. 32-2 illustrates a state in which the user handling the electronic device 101 with his right hand.

Referring to FIG. 32-1 and FIG. 32-2, as the electronic device 101 detects a user's handling state, the electronic device 101 may display an image on a specific area among areas of a display (e.g., the display 160). For example, when detecting that a user is handling the electronic device 101 with his/her left or right hand, the electronic device 101 may display images on the areas of the display 160 suitably to the handling state (e.g., left-handed handling, righthanded handling), under the control of a processor (e.g., the processor 120).

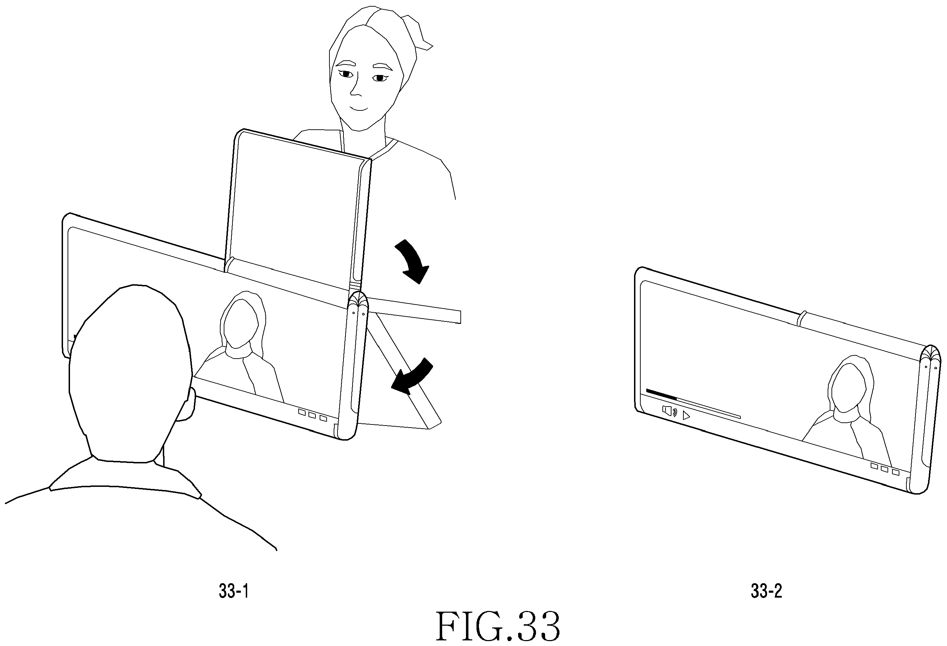

FIG. 33 is a diagram illustrating an additional function according a structure of an electronic device according to an embodiment.

In an embodiment, the electronic device 101 may be fixed at a specific angle according to a user's operation while a display (e.g., the display 160) is extended. In an embodiment, referring to FIG. 33-1, a user may have adjusted the degree of extension of the display (e.g., the display 160) of the electronic device 101 to a specific angle. In this case, a plurality of areas of the display (e.g., the display 160) may face different directions for each area.

In an embodiment, referring to FIG. 33-2, a plurality of users may be provided with displayed images through the areas of the display (e.g., the display 160) facing different directions.

An electronic device (e.g., the electronic device 101) may include a first housing (e.g., the first housing 210) which includes a first edge having a first length, a second edge perpendicular to the first edge and having a second length shorter than the first length, a third edge parallel to the first edge and having the first length, and a fourth edge parallel to the second edge and having the second length, a second housing (e.g., the second housing 220) which includes, along the third edge, a fifth edge of a third length shorter than the first length, and which is rotatable about a hinge (e.g., the hinge 230) corresponding to the third length, a flexible display (e.g., the flexible display 160) which includes a first area and a second area that correspond to the first housing (e.g., the first housing 210) and a third area that corresponds to the second housing (e.g., the second housing 220), the first area being an area corresponding to the second length and the third length, the second area being a remaining area other than the first area among the areas of the first housing (e.g., the first housing 210), and the third area of the flexible display (e.g., the flexible display 160) rotating with respect to the first area and the second area as the second housing (e.g., the second housing 220) rotates about the hinge (e.g., the hinge 230), and at least one processor (e.g., the processor 120) electrically connected to the flexible display (e.g., the flexible display 160).

In the electronic device (e.g., the electronic device 101), the second housing (e.g., the second housing 220) may include a sixth edge perpendicular to the fifth edge and having a horizontal length of a fourth length, a seventh edge parallel to the fifth edge and having the third length, and an eighth edge parallel to the sixth edge and having the fourth length.

In the electronic device (e.g., the electronic device 101), the flexible display (e.g., the flexible display 160) may include an area having a dummy pattern along the first edge to the eighth edge.

In the electronic device (e.g., the electronic device 101), a front camera module (e.g., the front camera module 180-1) may be disposed at a front side of the first housing (e.g., the first housing 210), and a rear camera module (e.g., the rear camera module 180-2) may be disposed at a rear side of the first housing (e.g., the first housing 210).

In the electronic device (e.g., the electronic device 101), the rear camera module (e.g., the rear camera module 180-2) may be disposed at a front side of the second housing (e.g., the second housing 220).

The electronic device (e.g., the electronic device 101) may further include a sensor module (e.g., the sensor module 176), and the processor (e.g., the processor 120) may identify a positional relationship between the first housing (e.g., the first housing 210) and the second housing (e.g., the second housing 220) by using the sensor module (e.g., the sensor module 176), and display content on at least one of the first area, the second area, and the third area of the flexible display (e.g., the flexible display 160), based on the positional relationship.

In the electronic device (e.g., the electronic device 101), the first housing (e.g., the first housing 210) may include a first magnet, and the second housing (e.g., the second housing 220) may include a second magnet, and the first magnet and the second magnet may act attractive forces.

In the electronic device (e.g., the electronic device 101), the flexible display (e.g., the flexible display 160) may include a reinforcement structure in at least a portion of a hinge (e.g., hinge 230) area corresponding to the hinge (e.g., the hinge 230).

In the electronic device (e.g., the electronic device 101), the reinforcement structure may be a structure in which a lower metal layer, a PI layer, a display layer, a shock absorption layer, a UTG layer, and a protective layer are stacked sequentially.

In the electronic device (e.g., the electronic device 101), the reinforcement structure may further include a protective substrate including a buffering material.

In the electronic device (e.g., the electronic device 101), the buffering material may include at least one of PSA and resin.

In the electronic device (e.g., the electronic device 101), the protective substrate may be disposed between the protective layer and the PI layer.

In the electronic device (e.g., the electronic device 101), the flexible display (e.g., the flexible display 160) may include a cutout area in at least a portion of a hinge (e.g., hinge 230) area corresponding to the hinge (e.g., the hinge 230).

In the electronic device (e.g., the electronic device 101), the first housing (e.g., the first housing 210) may be rotatable in a direction perpendicular to a direction in which the second housing (e.g., the second housing 220) rotates about the hinge (e.g., the hinge 230).

The electronic device (e.g., the electronic device 101) may include a third housing (e.g., the third housing 240), and the third housing (e.g., the third housing 240) may be connected to the first housing (e.g., the first housing 210) so as to be slid in/out with respect to the first housing (e.g., the first housing 210).

In the electronic device (e.g., the electronic device 101), the hinge (e.g., the hinge 230) may include a hinge (e.g., hinge 230) structure and a hinge (e.g., hinge 230) housing.

In the electronic device (e.g., the electronic device 101), the flexible display (e.g., the flexible display 160) may include a cutout area, parallel to a direction in which the second housing (e.g., the second housing) rotates, of a hinge (e.g., hinge 230) area corresponding to the hinge (e.g., the hinge 230).

In the electronic device (e.g., the electronic device 101), the flexible display (e.g., the flexible display 160) may be disposed on front surfaces of the first housing (e.g., the first housing 210) and the second housing (e.g., the second housing 220).

In the electronic device (e.g., the electronic device 101), a rear surface of the first housing (e.g., the first housing 210) and a rear surface of the second housing (e.g., the second housing 220) may face each other by rotating the second housing (e.g., the second housing 220) about the hinge (e.g., the hinge 230).

In the electronic device (e.g., the electronic device 101), the second housing (e.g., the second housing 220) may be free-stopped while rotating about the hinge 230 with respect to the first housing (e.g., the first housing 210).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device **characterized by** comprising:
a first housing which comprises a first edge having a first length, a second edge that is perpendicular to the first edge and has a second length shorter than the first length, a third edge that is parallel to the first edge and has the first length, and a fourth edge that is parallel to the second edge and has the second length;
a second housing which comprises, along the third edge, a fifth edge of a third length shorter than the first length, and which is rotatable about a hinge corresponding to the third length;
a flexible display which comprises a first area and a second area that correspond to the first housing and a third area that corresponds to the second housing, the first area being an area corresponding to the second length and the third length, the second area being a remaining area other than the first area among the areas of the first housing, and the third area of the flexible display rotating with respect to the first area and the second area as the second housing rotates about the hinge; and
at least one processor electrically connected to the flexible display.

2. The electronic device of claim 1, **characterized in that** the second housing comprises:
a sixth edge perpendicular to the fifth edge and having a horizontal length of a fourth length;
a seventh edge parallel to the fifth edge and having the third length; and
an eighth edge parallel to the sixth edge and having the fourth length.

3. The electronic device of claim 2, **characterized in that** the flexible display comprises an area having a dummy pattern along the first edge to the eighth edge.

4. The electronic device of claim 1, **characterized in that** a front camera module is disposed at a front side of the first housing, and
a rear camera module is disposed at a rear side of the first housing.

5. The electronic device of claim 1, **characterized by** further comprising a sensor module, and
**characterized in that** the processor:
identifies a positional relationship between the first housing and the second housing by using the sensor module; and
displays content on at least one of the first area, the second area, and the third area of the flexible display, based on the positional relationship.

6. The electronic device of claim 1, **characterized in that** the first housing comprises a first magnet,
the second housing comprises a second magnet, and
the first magnet and the second magnet act attractive forces.

7. The electronic device of claim 1, **characterized in that** the flexible display comprises a reinforcement structure in at least a portion of a hinge area corresponding to the hinge.

8. The electronic device of claim 7, **characterized in that** the reinforcement structure is a structure in which a lower metal layer, a PI layer, a display layer, a shock absorption layer, a UTG layer, and a protective layer are stacked sequentially.

9. The electronic device of claim 8, **characterized in that** the reinforcement structure further comprises a protective substrate comprising a buffering material.

10. The electronic device of claim 9, **characterized in that** the buffering material comprises at least one of PSA and resin, and
the protective substrate is disposed between the protective layer and the PI layer.

11. The electronic device of claim 1, **characterized in that** the flexible display comprises a cutout area in at least a portion of a hinge area corresponding to the hinge.

12. The electronic device of claim 1, **characterized in that** the first housing is rotatable in a direction perpendicular to a direction in which the second housing rotates about the hinge.

13. The electronic device of claim 1, **characterized by** comprising a third housing, and
**characterized in that** the third housing is connected to the first housing so as to be slid in/out with respect to the first housing.

14. The electronic device of claim 1, **characterized in that** the flexible display comprises a cutout area, parallel to a direction in which the second housing rotates, of a hinge area corresponding to the hinge.

15. The electronic device of claim 1, **characterized in that** the flexible display is disposed on front surfaces of the first housing and the second housing.
